# EUROPEAN PATENT APPLICATION

(11) **EP 4 524 447 A1**
(43) Date of publication of application: **19.03.2025**
(21) Application number: 23855045.3
(22) Date of filing: 12.07.2023
(51) Int. Cl.: F16M 7/00, D06F 39/12, A47L 15/42, F24F 13/20, A47B 91/02

(54) **HEIGHT ADJUSTMENT DEVICE AND HOME APPLIANCE COMPRISING SAME**

(30) Priority: 19.08.2022 KR 20220104232; 09.06.2023 KR 20230074480
(71) Applicant: Samsung Electronics Co., Ltd., Suwon-si, Gyeonggi-do 16677 (KR)
(72) Inventor: SONG, Taehoon, Suwon-si Gyeonggi-do 16677 (KR); OH, Juik, Suwon-si Gyeonggi-do 16677 (KR); LEE, Jongwon, Suwon-si Gyeonggi-do 16677 (KR); LEE, Cheolmin, Suwon-si Gyeonggi-do 16677 (KR); JEON, Hojune, Suwon-si Gyeonggi-do 16677 (KR); JEONG, Hyunsung, Suwon-si Gyeonggi-do 16677 (KR)
(74) Representative: Walaski, Jan Filip
(86) International application number: PCT/KR2023/009919
(87) International publication number: WO 2024/039074

(57) **Abstract**

This home appliance comprises a main body, and a height adjustment device for adjusting the height of the main body from the ground. The height adjustment device comprises: a housing, which may be coupled to the lower portion of the main body; a leg which is disposed to pass through the housing, and which has a male thread portion formed on the outer peripheral surface thereof; a worm wheel which is disposed in the housing, and which has, on the inner peripheral surface thereof, a female thread portion corresponding to the male thread portion of the leg, and thus is screw-coupled to the leg so as to be liftable/lowerable; a worm engaging with the worm wheel so as to rotate the worm wheel; and a worm shaft, which rotates the worm and may be separated from the worm. The housing includes a locking portion for preventing the worm shaft coupled to the worm from breaking away toward the outside of the housing.

## Description

### [Technical Field]

This disclosure relates to a height adjustment device and a home appliance having the same.

### [Background Art]

Home appliances may be installed in indoor spaces, and recently, in order to improve space utilization, built-in home appliances have been widely used.

Home appliances may include a height adjustment device that adjusts the height of the home appliance from the ground and adjusts the level of the home appliance. The height adjustment device may be installed at the bottom of the home appliance. On the other hand, when the height adjustment device is installed at the rear of the home appliance, the user's accessibility may be lowered.

### [Disclosure]

### [Technical Problem]

One aspect of the present disclosure provides a height adjustment device with improved accessibility, and a home appliance having the same.

One aspect of the present disclosure provides a height adjustment device that may be easily coupled to a home appliance, and a home appliance having the same.

One aspect of the present disclosure provides a height adjustment device with a worm shaft that may be detachable, and a home appliance having the same.

One aspect of the present disclosure provides a height adjustment device with a worm shaft that may be detachable in various directions, and a home appliance having the same.

One aspect of the present disclosure provides a height adjustment device that may prevent a worm shaft from being easily separated from a worm, and a home appliance having the same.

One aspect of the present disclosure provides a height adjustment device that may allow a leg to be easily coupled to a worm wheel, and a home appliance having the same.

One aspect of the present disclosure provides a height adjustment device that may be prevented from being damaged, and a home appliance having the same.

One aspect of the present disclosure provides a height adjustment device with high installation versatility, and a home appliance having the same.

The technical objectives of the present invention are not limited to the above, and other objectives that are not described above may become apparent to those of ordinary skill in the art based on the following descriptions.

A home appliance according to an embodiment of the disclosure includes: a main body; and a height adjustment device configured to adjust a height of the main body from a ground, wherein the height adjustment device includes: a housing configured to be coupled to a lower portion of the main body; a leg arranged to pass through the housing and comprising a male thread portion formed on an outer circumferential surface thereof; a worm wheel inside the housing and comprising a female thread portion formed on an inner circumferential surface thereof, the female thread portion corresponding to the male thread portion of the leg such that the worm wheel is screw-coupled to the leg to ascend and descend; a worm engaged with the worm wheel to rotate the worm wheel; and a worm shaft configured to rotate the worm, the worm shaft being attachable to and detachable from the worm. The housing comprises a locking portion configured to prevent the worm shaft coupled to the worm from being separated from the housing.

A height adjustment device according to an embodiment of the disclosure includes: a housing; a leg arranged to pass through the housing; a worm wheel arranged inside the housing and coupled to the leg to ascend and descend relative to the leg; a worm engaged with the worm wheel to rotate the worm wheel; a worm shaft configured to rotate the worm, the worm shaft being attachable to and detachable from the worm; and a locking portion configured to guide the worm shaft to be inserted into the housing and coupled to the worm and prevent the worm shaft coupled to the worm from being separated from the housing.

### [DESCRIPTION OF DRAWINGS]

FIG. 1 is a perspective view illustrating a refrigerator, which is a type of home appliance, according to an embodiment of the present disclosure.
FIG. 2 is a perspective view illustrating a height adjustment device that is installed at the rear of the refrigerator shown in FIG. 1, when separated from the refrigerator.
FIG. 3 is a perspective view illustrating a height adjustment device according to an embodiment.
FIG. 4 is an exploded perspective view illustrating components of a height adjustment device according to an embodiment.
FIG. 5 is an exploded perspective view illustrating components of a height adjustment device according to an embodiment.
FIG. 6 is a cross-sectional view illustrating a worm wheel of a height adjustment device according to an embodiment that is raised and lowered.
FIG. 7 is a cross-sectional view illustrating a worm wheel of a height adjustment device according to an embodiment in a raised position.
FIG. 8 is a cross-sectional view illustrating a worm wheel of a height adjustment device according to an embodiment in a raised position with a leg separated.
FIG. 9 is a perspective view illustrating a process of a height adjustment device being coupled to a main body according to an embodiment.
FIG. 10 is a perspective view illustrating a height adjustment device coupled to a main body according to an embodiment.
FIG. 11 is a perspective view illustrating a worm shaft separated from a height adjustment device according to an embodiment.
FIG. 12 is an enlarged view of a locking portion of a height adjustment device according to an embodiment.
FIGS. 13A to 13D are view illustrating a process of inserting a worm shaft of a height adjustment device into a housing according to an embodiment.
FIG. 14 is a perspective view illustrating a process of a height adjustment device being coupled to a main body according to an embodiment.
FIG. 15 is a perspective view illustrating a height adjustment device coupled to a main body according to an embodiment.
FIG. 16 is a perspective view illustrating a process of a height adjustment device being coupled to a main body and rotated according to an embodiment.
FIG. 17 is a perspective view illustrating a process of a height adjustment device being coupled to a main body according to an embodiment.
FIG. 18 is a perspective view illustrating a height adjustment device coupled to a main body according to an embodiment.
FIG. 19 is a perspective view illustrating a process of a height adjustment device being coupled to a main body and rotated according to an embodiment.
FIG. 20 is a perspective view illustrating a process of a height adjustment device being coupled to a main body according to an embodiment.
FIG. 21 is a perspective view of a process of a height adjustment device being coupled to a main body according to an embodiment, when viewed from below.
FIG. 22 is an exploded perspective view illustrating components of a height adjustment device according to an embodiment.
FIG. 23 is an exploded perspective view illustrating components of a height adjustment device according to an embodiment.
FIG. 24 is a cross-sectional view illustrating a height adjustment device according to an embodiment.
FIG. 25 is a perspective view illustrating a height adjustment device according to an embodiment.
FIG. 26 is a perspective view illustrating a worm shaft of a height adjustment device coupled to a surrounding structure according to an embodiment.
FIG. 27 is a perspective view illustrating a worm shaft of a height adjustment device coupled to a surrounding structure according to an embodiment.
FIG. 28 is a perspective view illustrating a worm shaft of a height adjustment device coupled to a surrounding structure according to an embodiment.

### [Modes of the Invention]

Various embodiments of the present document and terms used therein are not intended to limit the technical features described in this document to specific embodiments, and should be understood to include various modifications, equivalents, or substitutes of the corresponding embodiments.

In connection with the description of the drawings, similar reference numerals may be used for similar or related components.

The singular form of a noun corresponding to an item may include one or a plurality of the items unless clearly indicated otherwise in a related context.

In this document, phrases, such as "A or B", "at least one of A and B", "at least one of A or B," "A, B or C," "at least one of A, B and C," and "at least one of A, B, or C", may include any one or all possible combinations of items listed together in the corresponding phrase among the phrases.

As used herein, the term "and/or" includes any and all combinations of one or more of associated listed items.

Terms such as "1st", "2nd", "primary", or "secondary" may be used simply to distinguish a component from other components, without limiting the component in other aspects e. g. , importance or order.

Further, as used in the disclosure, the terms "front", "rear", "top", "bottom", "side", "left", "right", "upper", "lower", and the like are defined with reference to the drawings, and are not intended to limit the shape and position of each component.

It will be understood that when the terms "includes," "comprises," "including," "has," "have," "comprising," and the like when used in this specification, specify the presence of stated features, figures, steps, operations, components, members, or combinations thereof, but do not preclude the presence or addition of one or more other features, figures, steps, operations, components, members, or combinations thereof.

It will be understood that when a certain component is referred to as being "connected to", "coupled to", "supported by" or "in contact with" another component, it may be directly or indirectly connected to, coupled to, supported by, or in contact with the other component. When a component is indirectly connected to, coupled to, supported by, or in contact with another component, it may be connected to, coupled to, supported by, or in contact with the other component through a third component.

It will also be understood that when a component is referred to as being "on" another component, it may be directly on the other component or intervening components may also be present.

A refrigerator according to an embodiment of the disclosure may include a main body.

The "main body" may include an inner case, an outer case positioned outside the inner case, and an insulation provided between the inner case and the outer case.

The "inner case" may include a case, a plate, a panel, or a liner forming a storage compartment also referred to as a storage room. The inner case may be formed as one body, or may be formed by assembling a plurality of plates together. The "outer case" may form an appearance of the main body, and be coupled to an outer side of the inner case such that the insulation is positioned between the inner case and the outer case.

The "insulation" may insulate inside of the storage compartment from outside of the storage compartment to maintain inside temperature of the storage compartment at appropriate temperature without being influenced by an external environment of the storage compartment. According to an embodiment of the disclosure, the insulation may include a foaming insulation. The foaming insulation may be molded by fixing the inner case and the outer case with jigs, etc. and then injecting and foaming urethane foam as a mixture of polyurethane and a foaming agent between the inner case and the outer case.

According to an embodiment of the disclosure, the insulation may include a vacuum insulation in addition to a foaming insulation, or may be configured only with a vacuum insulation instead of a forming insulation. The vacuum insulation may include a core material and a cladding material accommodating the core material and sealing the inside with vacuum or pressure close to vacuum. The vacuum insulation may further include an adsorbent for adsorbing a gas and water to stably maintain a vacuum state. However, the insulation is not limited to the above-mentioned foaming insulation or vacuum insulation, and may include various materials capable of being used for insulation.

The "storage compartment" may include a space defined by the inner case. The storage compartment may further include the inner case defining the space. Medicines or cosmetics, as well as food items, may be stored in the storage compartment, and one side of the storage compartment may open to enable a user to put items in or take items out.

The refrigerator may include one or more storage compartments. In a case in which two or more storage compartments are formed in the refrigerator, the respective storage compartments may have different purposes of use, and may be maintained at different temperature. To this end, the respective storage compartments may be partitioned by a partition wall including an insulation.

The storage compartment may be maintained within an appropriate temperature range according to a purpose of use, and include a "refrigerating compartment", a "freezing compartment", and a "temperature conversion compartment" according to purposes of use and/or temperature ranges. The refrigerating compartment may be maintained at appropriate temperature to keep food refrigerating, and the freezing compartment may be maintained at appropriate temperature to keep food frozen. The "refrigerating" may be keeping food cold without freezing the food, and for example, the refrigerating compartment may be maintained within a range of 0 degrees Celsius to 7 degrees Celsius. The "freezing" may be freezing food or keeping food frozen, and for example, the freezing compartment may be maintained within a range of -20 degrees Celsius to -1 degrees Celsius. The temperature conversion compartment may be used as any one of a refrigerating compartment or a freezing compartment according to or regardless of a user's selection.

The storage compartment may also be called various other terms, such as "vegetable compartment", "freshness compartment", "cooling compartment", and "ice-making compartment", in addition to "refrigerating compartment", "freezing compartment", and "temperature conversion compartment", and the terms, such as "refrigerating compartment", "freezing compartment", "temperature conversion compartment", etc., as used below need to be understood to represent storage compartments having the corresponding purposes of use and the corresponding temperature ranges.

The refrigerator according to an embodiment of the disclosure may include at least one door configured to open or close the open side of the storage compartment. The respective doors may be provided to open and close one or more storage compartments, or a single door may be provided to open and close a plurality of storage compartments. The door may be rotatably or slidably mounted on the front of the main body.

The "door" may seal the storage compartment in a closed state. The door may include an insulation, like the main body, to insulate the storage compartment in the closed state.

According to an embodiment, the door may include an outer door plate forming the front surface of the door, an inner door plate forming the rear surface of the door and facing the storage compartment, an upper cap, a lower cap, and a door insulation provided therein.

A gasket may be provided on the edge of the inner door plate to seal the storage compartment by coming into close contact with the front surface of the main body when the door is closed. The inner door plate may include a dyke that protrudes rearward to allow a door basket for storing items to be fitted.

According to an embodiment, the door may include a door body and a front panel that is detachably coupled to the front of the door body and forms the front surface of the door. The door body may include an outer door plate that forms the front surface of the door body, an inner door plate that forms the rear surface of the door body and faces the storage compartment, an upper cap, a lower cap, and a door insulator provided therein.

The refrigerator may be classified as French Door Type, Side-by-side Type, Bottom Mounted Freezer BMF, Top Mounted Freezer TMF, or One Door Refrigerator depending on the arrangement of the doors and the storage compartments.

The refrigerator according to an embodiment of the disclosure may include a cold air supply device for supplying cold air to the storage compartment.

The "cold air supply device" may include a machine, an apparatus, an electronic device, and/or a combination system thereof, capable of generating cold air and guiding the cool air to cool the storage compartment.

According to an embodiment of the disclosure, the cold air supply device may generate cold air through a cooling cycle including compression, condensation, expansion, and evaporation processes of refrigerants. To this end, the cold air supply device may include a cooling cycle device having a compressor, a condenser, an expander, and an evaporator to drive the cooling cycle. According to an embodiment of the disclosure, the cold air supply device may include a semiconductor such as a thermoelectric element. The thermoelectric element may cool the storage compartment by heating and cooling actions through the Peltier effect.

The refrigerator according to an embodiment of the disclosure may include a machine compartment where at least some components belonging to the cold air supply device are installed.

The "machine compartment" may be partitioned and insulated from the storage compartment to prevent heat generated from the components installed in the machine compartment from being transferred to the storage compartment. To dissipate heat from the components installed inside the machine compartment, the machine compartment may communicate with outside of the main body.

The refrigerator according to an embodiment of the disclosure may include a dispenser provided on the door to provide water and/or ice. The dispenser may be provided on the door to allow access by the user without opening the door.

The refrigerator according to an embodiment of the disclosure may include an ice-maker that forms ice. The ice-maker may include an ice-making tray that stores water, an ice moving device that separates ice from the ice-making tray, and an ice-bucket that stores ice generated in the ice-making tray.

The refrigerator according to an embodiment of the disclosure may include a controller for controlling the refrigerator.

The "controller" may include a memory for storing and/or memorizing data and/or programs for controlling the refrigerator, and a processor for outputting control signals for controlling the cold air supply device, etc. according to the programs and/or data memorized in the memory.

The memory may store or record various information, data, commands, programs, and the like necessary for operations of the refrigerator. The memory may store temporary data generated while generating control signals for controlling components included in the refrigerator. The memory may include at least one of volatile memory or non-volatile memory, or a combination thereof.

The processor may control the overall operation of the refrigerator. The processor may control the components of the refrigerator by executing programs stored in memory. The processor may include a separate neural processing unit NPU that performs an operation of an artificial intelligence AI model. In addition, the processor may include a central processing unit CPU, a graphics processor GPU, and the like. The processor may generate a control signal to control the operation of the cold air supply device. For example, the processor may receive temperature information of the storage compartment from a temperature sensor, and generate a cooling control signal for controlling an operation of the cold air supply device based on the temperature information of the storage compartment.

Furthermore, the processor may process a user input of a user interface and control an operation of the user interface according to the programs and/or data memorized/stored in the memory. The user interface may be provided using an input interface and an output interface. The processor may receive the user input from the user interface. In addition, the processor may transmit a display control signal and image data for displaying an image on the user interface to the user interface in response to the user input.

The processor and memory may be provided integrally or may be provided separately. The processor may include one or more processors. For example, the processor may include a main processor and at least one sub-processor. The memory may include one or more memories.

The refrigerator according to an embodiment of the disclosure may include a processor and a memory for controlling all the components included in the refrigerator, and may include a plurality of processors and a plurality of memories for individually controlling the components of the refrigerator. For example, the refrigerator may include a processor and a memory for controlling the operation of the cold air supply device according to an output of the temperature sensor. In addition, the refrigerator may be separately equipped with a processor and a memory for controlling the operation of the user interface according to the user input.

A communication module may communicate with external devices, such as servers, mobile devices, and other home appliances via a nearby access point AP. The AP may connect a local area network LAN to which a refrigerator or a user device is connected to a wide area network WAN to which a server is connected. The refrigerator or the user device may be connected to the server via the WAN.

The input interface may include keys, a touch screen, a microphone, and the like. The input interface may receive the user input and pass the received user input to the processor.

The output interface may include a display, a speaker, and the like. The output interface may output various notifications, messages, information, and the like generated by the processor.

Hereinafter, embodiments according to the present invention will be described in detail with reference to the accompanying drawings.

In addition, for convenience of description, a refrigerator will be described below as an example, but the configuration of the present disclosure is not limited thereto and may be applied to various home appliances including a main body. For example, the configuration of the present disclosure may be applied to washing machines, dishwashers, air conditioners, etc. the configuration of the present disclosure may also be applied to furniture, such as beds and wardrobes, in addition to home appliances.

Meanwhile, in an indoor space in which home appliances are installed, the ceiling may be defined as being formed at the "upper side" and the ground may be defined as being formed at the "lower side". In addition, in the case of a built-in home appliance, the direction in which the user may access may be defined as the "front" and the direction in contact with the wall may be defined as the "rear".

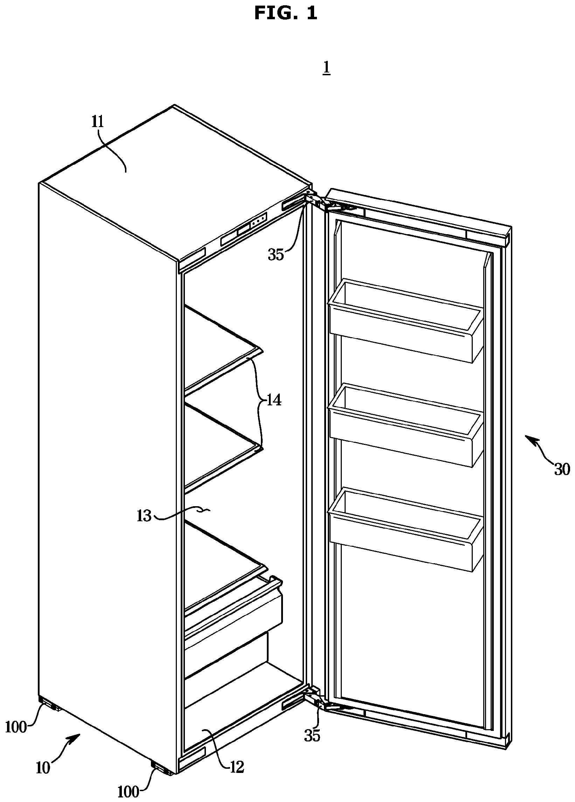

FIG. 1 is a perspective view illustrating a refrigerator, which is a type of home appliance, according to an embodiment of the present disclosure.

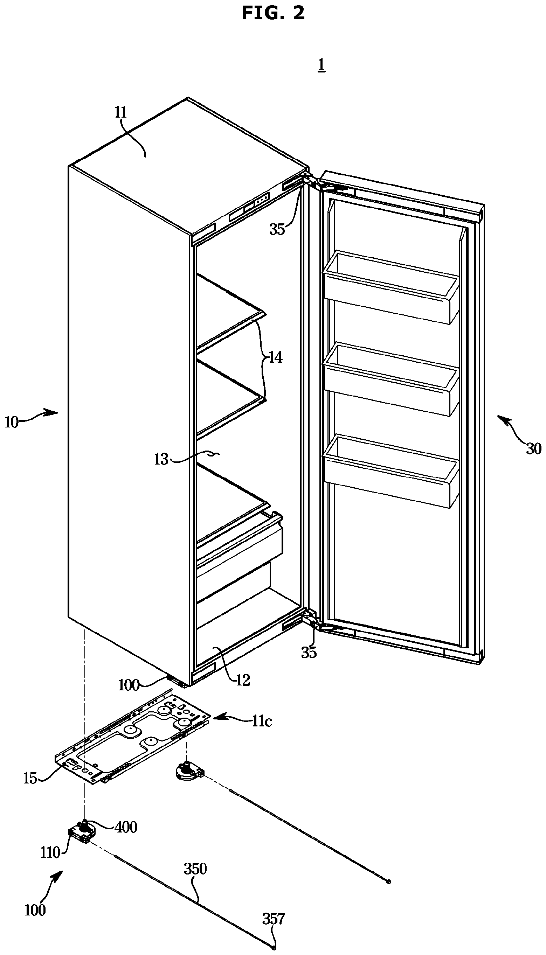

FIG. 2 is a perspective view illustrating a height adjustment device that is installed at the rear of the refrigerator shown in FIG. 1, when separated from the refrigerator.

For convenience of description, In FIGS. 1 and 2, a refrigerator 1 including a main body 10 having a single storage compartment 13 formed inside and a single door 30 for opening and closing the storage compartment 13 is illustrated, but the present disclosure is not limited thereto. For example, the main body 10 according to the present disclosure may include a plurality of storage compartments divided into a refrigerating compartment and a freezing compartment, and may include a plurality of doors for opening and closing each of the storage compartments.

For example, the refrigerator 1 according to the present disclosure may be a side by Side type in which the refrigerating compartment and the freezing compartment are arranged left and right, or a Bottom Mounted Freezer type in which the refrigerating compartment is formed on the upper side and the freezing compartment is formed on the lower side. Alternatively, the refrigerator 1 according to the present disclosure may be a French-Door (FDR) type in which a plurality of doors open and close at least one of the plurality of storage compartments.

Referring to FIGS. 1 and 2, the refrigerator 1 may include a main body 10 forming an exterior and a door 30 for opening and closing the main body 10. The door 30 may be rotatably coupled to the main body 10 to open and close a storage compartment 13 formed inside the main body 10. The door 30 may be provided at the front of the main body 10.

The refrigerator 1 may include a cooling system (not shown) for supplying cold air to the storage compartment 13. The cooling system may include a compressor (not shown), a condenser (not shown), an evaporator (not shown), and a refrigerant pipe (not shown) through which refrigerant flows.

By the cooling system, when the storage compartment 13 is a refrigerating compartment, the inside of the storage compartment 13 is maintained at approximately 0 to 5 degrees Celsius, allowing food to be refrigerated, and when the storage compartment 13 is a freezing compartment, the inside of the storage compartment 13 is maintained at approximately 0 to -30 degrees Celsius, allowing food to be frozen.

The main body 10 may include an outer case 11 forming an outer appearance and an inner case 12 forming a storage compartment 13 on the inner side of the outer case 11. A hinge assembly 35 that rotatably connects the door 30 to the main body 10 may be connected to the outer case 11.

The inner case 12 may form a storage compartment 13 to store food, etc. inside. In order to facilitate the storage of food, a shelf 14 on which food may be placed may be provided in the storage compartment 13.

An insulation (not shown) is foamed between the outer case 11 and the inner case 12 to mutually connect the outer case 11 and the inner case 12, thereby insulating the inside of the storage compartment 13 from the outside of the main body 10 and preventing cold air from the storage compartment 13 from leaking out to the outside.

The refrigerator 1 may include a height adjustment device 100. The height adjustment device 100 may be installed in the refrigerator 1 to adjust the height of the refrigerator 1 or adjust the level of the refrigerator 1.

The height adjustment device 100 may be installed on the lower portion of the refrigerator 1. The height adjustment device 100 may be positioned at each of four corners of the bottom surface of the refrigerator 1. The height adjustment device 100 may include a front height adjustment device provided at the front of the refrigerator 1 and a rear height adjustment device provided at the rear of the refrigerator 1.

When the height adjustment device 100 is installed at the rear of the refrigerator 1, the user's accessibility may be reduced. Accordingly, the user may insert a worm shaft 350 from the front of the refrigerator 1 to the rear of the refrigerator 1 such that the worm shaft 350 is inserted into a housing 110 of the height adjustment device 100. Afterwards, the worm shaft 350 may be rotated such that the housing 110 of the height adjustment device 100 is raised and lowered to raise and lower a main body 10 coupled thereto, thereby adjusting the height and/or level of the refrigerator 1. Hereinafter, a case in which the height adjustment device is installed at the rear will be described as an example.

Referring to FIG. 2, the height adjustment device 100 may be coupled to the lower portion of the refrigerator 1. The height adjustment device 100 may be coupled to the main body 10. The height adjustment device 100 may be coupled to the outer case 11. The height adjustment device 100 may be coupled to a coupling portion 11c formed on the lower portion of the outer case 11. The height adjustment device 100 may be coupled to a housing coupling hole 15 of the coupling portion 11c.

The height adjustment device 100 may be installed on the refrigerator 1 with the worm shaft 350 separated. That is, by installing the height adjustment device 100 that omits the configuration of the worm shaft 350 in the refrigerator 1, the manufacturing cost may be reduced.

The user may adjust the height and/or level of the refrigerator 1 using the worm shaft 350 when needed, and then remove the worm shaft 350. Accordingly, since the worm shaft 350 is not normally exposed to the outside, the aesthetics may be improved.

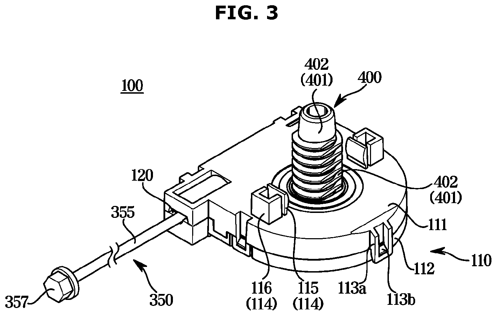

FIG. 3 is a perspective view illustrating a height adjustment device according to an embodiment.

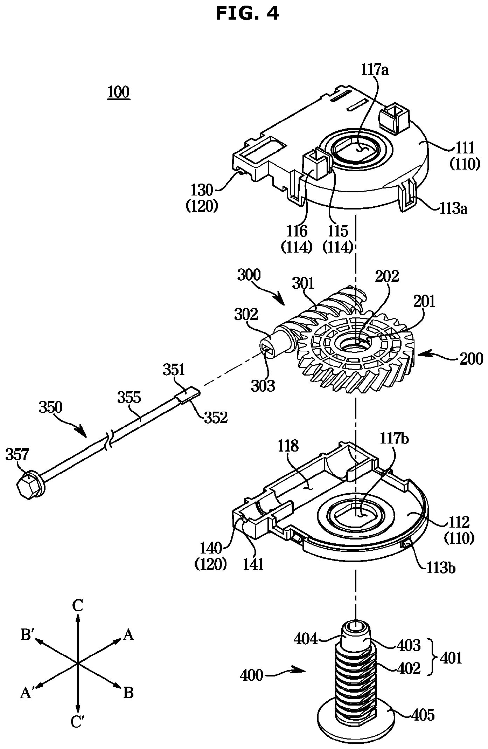

FIG. 4 is an exploded perspective view illustrating components of a height adjustment device according to an embodiment.

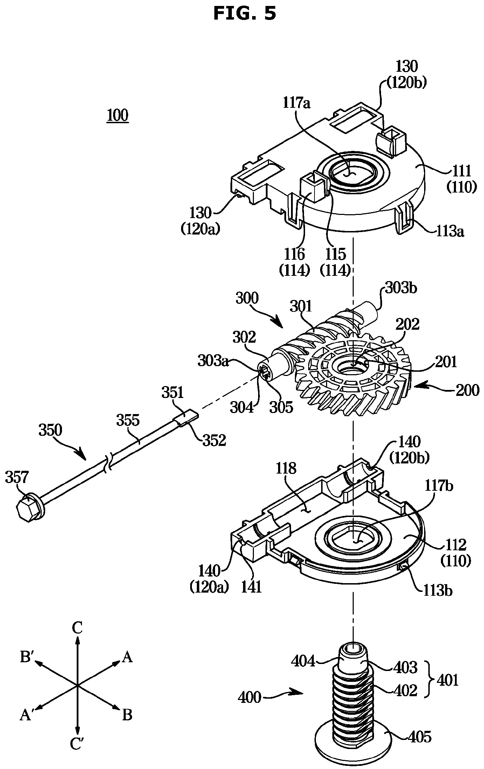

FIG. 5 is an exploded perspective view illustrating components of a height adjustment device according to an embodiment.

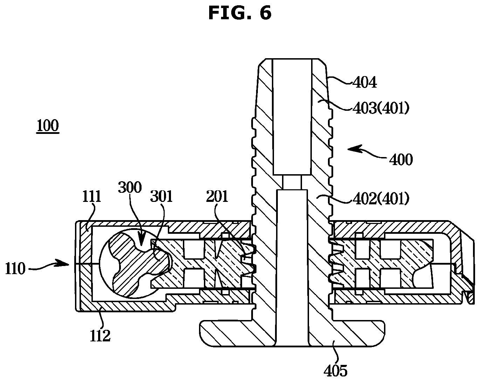

FIG. 6 is a cross-sectional view illustrating a worm wheel of a height adjustment device according to an embodiment that is raised and lowered.

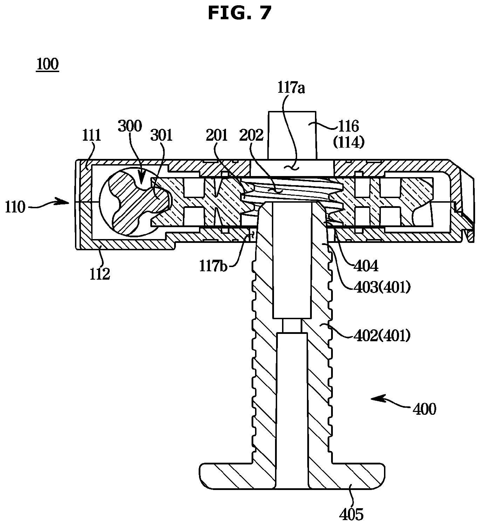

FIG. 7 is a cross-sectional view illustrating a worm wheel of a height adjustment device according to an embodiment in a raised position.

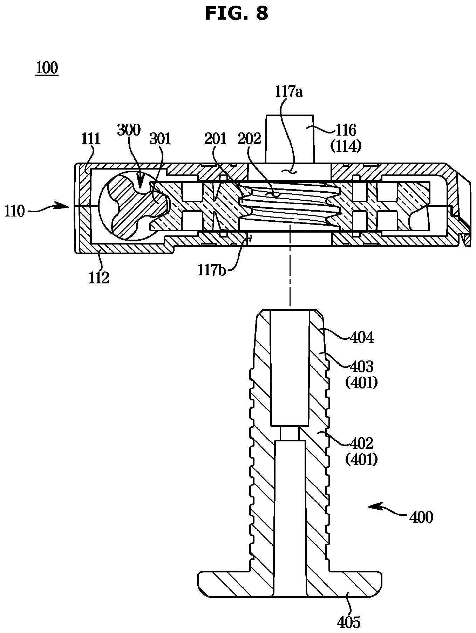

FIG. 8 is a cross-sectional view illustrating a worm wheel of a height adjustment device according to an embodiment in a raised position with a leg separated.

The height adjustment device 100 may include a housing 110. The housing 110 may form an exterior of the height adjustment device 100. An accommodation space 118 may be formed inside the housing 110. Since internal components of the height adjustment device 100 are accommodated in the accommodation space 118, the height adjustment device 100 may be implemented in a simple kit form. Accordingly, the height adjustment device 100 may be easily installed on the main body 10.

The housing 110 may include an upper housing 111 and a lower housing 112. The upper housing 111 may be arranged adjacent to the main body 10 of the refrigerator 1. The upper housing 111 may be arranged to face the outer case 11. The lower housing 112 may be arranged adjacent to the ground. The lower housing 112 may be arranged to face the ground.

The upper housing 111 and the lower housing 112 may be coupled to each other. However, the present disclosure is not limited thereto, and the upper housing 111 and the lower housing 112 may be formed integrally formed with each other.

The upper housing 111 may include an upper housing fastening portion 113a, and the lower housing 112 may include a lower housing fastening portion 113b. The upper housing fastening portion 113a may have a catching jaw shape. The lower housing fastening portion 113b may have a hook shape corresponding to the catching jaw shape. Alternatively, the upper housing fastening portion 113a may have a hook shape, and the lower housing fastening portion 113b may have a catching jaw shape. The housing 110 may be easily coupled by the upper housing fastening portion 113a and the lower housing fastening portion 113b.

The housing 110 may include a coupling protrusion 114. The height adjustment device 100 may be coupled to the coupling portion 11c of the outer case 11 by the coupling protrusion 114. The coupling protrusion 114 may be provided on the upper housing 111. The coupling protrusion 114 may be formed to protrude upward. The coupling protrusion 114 may be provided in plural.

The coupling protrusion 114 may include a boss portion 116 and a hook portion 115. The boss portion 116 and the hook portion 115 may be provided as a pair. The hook portion 115 may be provided to be pressed toward the boss portion 116.

The housing 110 may include a housing through hole 117 through which the leg 400 may pass. The housing through hole 117 may be formed approximately at the center of the housing 110. The housing through hole 117 may have an approximately circular shape. Specifically, the housing through hole 117 may have an oval shape in the form of a D-cut. For example, the housing through hole 117 may be provided to have a quadrangular shape at the center and a semicircular shape on both sides of the quadrangular shape. However, the present disclosure is not limited thereto, and the housing through hole 117 may be provided in various shapes.

The housing through hole 117 may include an upper housing through hole 117a formed in the upper housing 111 and a lower housing through hole 117b formed in the lower housing 112. The lower housing through hole 117b may be formed corresponding to the position of the upper housing through hole 117a.

The height adjustment device 100 may include a worm wheel 200. The worm wheel 200 may be placed inside the housing 110. The worm wheel 200 may include a worm wheel through hole 202 through which the leg 400 may pass. The worm wheel through hole 202 may be formed approximately at the center of the worm wheel 200. The worm wheel through hole 202 may be formed corresponding to the position of the housing through hole 117.

A female thread portion 201 may be provided on the outer circumferential surface of the worm wheel through hole 202. A male thread portion 402 of the leg 400 may be screw-coupled to the female thread portion 201 of the worm wheel 200. The female thread portion 201 may be provided to engage with the male thread portion 402 of the leg 400.

The height adjustment device 100 may include a worm 300. The worm 300 may be placed inside the housing 110. The worm 300 may be arranged to rotate the worm wheel 200. The rotation axis of the worm 300 may be arranged perpendicular to the rotation axis of the worm wheel 200. The worm 300 may be engaged with the worm wheel 200. A worm engagement portion 301 of the worm 300 may be engaged with the worm wheel 200.

A worm insertion portion 302 may be provided at one end of the worm 300 to which a worm shaft 350 is coupled. The worm insertion portion 302 may be connected to the worm engagement portion 301. The worm insertion portion 302 may include a worm hole 303 into which an insertion plate 352 of the worm shaft 350 is inserted.

The worm hole 303 may be provided to correspond to the shape of the insertion plate 352. The worm hole 303 may include an approximately rectangular shape. The worm hole 303 may be formed in a straight line. However, the present disclosure is not limited thereto, and the worm hole 303 may be provided in a different shape.

The height adjustment device 100 may include a worm shaft 350. The worm shaft 350 may be coupled to the worm 300 to rotate the worm 300. The worm shaft 350 may be detachable from the worm 300.

The worm shaft 350 may include an insertion portion 351 coupled to the worm 300. The insertion portion 351 may be formed at one end of the worm shaft 350. The insertion portion 351 may include an insertion plate 352. The insertion plate 352 may have a rectangular hexahedron shape. The insertion plate 352 may have a straight shape.

The worm shaft 350 may include a handle portion 357 formed on the opposite side of the insertion portion 351. The handle portion 357 may be formed on the other end of the worm shaft 350. A user may grasp the handle portion 357 to couple or separate the worm shaft 350 to or from the worm 300, or rotate the worm shaft 350.

The worm shaft 350 may include a rib portion 355. The rib portion 355 may extend between the insertion portion 351 and the handle portion 357. The rib portion 355 may have a cylindrical shape. The cross-sectional area of the rib portion 355 may be circular.

The height adjustment device 100 may include a locking portion 120. The locking portion 120 may be formed in the housing 110.

The height adjustment device 100 may include a leg 400. The leg 400 may be arranged to pass through the inside of the housing 110. The leg 400 may pass through the housing through hole 117 and the worm wheel through hole 202.

The leg 400 may include a leg body 401 provided to pass through the housing 110. The leg body 401 may be formed to protrude upward from a support plate 405. The leg body 401 may pass through the housing through hole 117 and the worm wheel through hole 202.

The leg 400 may include a support plate 405 provided on the lower side of the leg body 401. The support plate 405 may support the leg body 401. The support plate 405 may be in contact with the ground. The support plate 405 may have a circular plate shape. The support plate 405 may be provided to have a cross-sectional area larger than that of the leg body 401.

The leg body 401 may include a male thread portion 402. A screw thread may be formed on an outer circumferential surface of the male thread portion 402. The male thread portion 402 may be engaged with the female thread portion 201 of the worm wheel 200.

The leg body 401 may include a head portion 403. The head portion 403 may be provided at one end of the male thread portion 402. The head portion 403 may be provided at one end of the male thread portion 402 adjacent to the outer case 11. The head portion 403 may be provided on the upper portion of the male thread portion 402.

The head portion 403 may not have screw threads formed thereon. The outer circumferential surface of the head portion 403 may include a smooth surface. The outer circumferential surface of the head portion 403 may include a curved surface. The cross-sectional area of the head portion 403 may be formed to be smaller than the cross-sectional area of the male thread portion 402.

The outer circumferential surface of the head portion 403 may include an inclined surface 404. The head portion 403 may include an inclined surface 404 sloping upward toward the outer case 11 as it approaches the center thereof. The inclined surface 404 may have a conical shape that is convex toward the top. The cross-sectional area of one end of the head portion 403 adjacent to the main screw portion 402 may be formed to be larger than the cross-sectional area of the other end located on the opposite side.

Referring to FIG. 5, the worm hole 303 may include a first worm hole 303a formed on one end of the worm 300 and a second worm hole 303b formed on the other end located on the opposite side of the one end. The locking portion 120 may include a first locking portion 120a facing the first worm hole 303a and a second locking portion 120b facing the second worm hole 303b. The first locking portion 120a may be formed on one end of the housing, and the second locking portion 120b may be formed on the other end located on the opposite side of the one end.

That is, since the worm holes 303a and 303b and the locking portions 120a and 120b are provided in plural, the worm shaft 350 may be inserted in a plurality of directions with respect to the housing 110. Accordingly, the accessibility of a user inserting the worm shaft 350 into the height adjustment device 100 may be improved.

The worm hole 303 may include a first groove 304 and a second groove 305 corresponding to the shape of the insertion plate 352. Since the insertion plate 352 may be inserted into the first groove 304 and/or the second groove 305, the worm shaft 350 may be easily inserted into the worm 300. The second groove 305 may be provided to be perpendicular to the first groove 304. The centers of the first groove 304 and the second groove 305 may coincide. The first groove 304 and the second groove 305 may form a cross shape. However, the present disclosure is not limited thereto, and the worm hole 303 may include three or more grooves.

Referring to FIGS. 6 to 8, the worm wheel 200 may be raised and lowered by rotating relative to the leg 400 through the rotation of the worm 300. The worm wheel 200 may move up and down relative to the leg body 401.

The housing 110 may be raised and lowered according to the raising and lowering of the worm wheel 200. Since the housing 110 is vertically coupled to the coupling portion 11c of the outer case 11, the coupling portion 11c of the outer case 11 may be raised and lowered as the housing 110 is raised and lowered. In other words, the main body 10 may be raised and lowered together with the raising and lowering of the worm wheel 200, allowing adjustment of the height and/or level of the refrigerator 1.

Referring to FIG. 8, when the worm wheel 200 is raised by a distance beyond a certain height, the leg 400 may be separated from the worm wheel through hole 202 and/or the housing through hole 117. In this case, it may be difficult to recouple the worm wheel through hole 202 and/or the housing through hole 117 to the leg 400. In particular, when the height adjustment device 100 is placed at the rear of the refrigerator 1 and the user's accessibility is poor, it may be difficult to engage the male thread portion 402 of the leg 400 with the female thread portion 201 of the worm wheel 200.

The leg 400 according to the present disclosure may include the head portion 403 without threads. Since the outer circumferential surface of the head portion 403 is smoothly formed, the head portion 403 may be easily coupled to the entrance of the worm wheel through hole 202 and/or the housing through hole 117.

In addition, since the head portion 403 includes the inclined surface 404, the head portion 403 may be easily coupled to the worm wheel through hole 202 and/or the housing through hole 117. Specifically, since the inclined surface 404 slopes upward toward the center of the worm wheel through hole 202 and/or the housing through hole 117, the leg 400 may be easily coupled by moving toward the center of the worm wheel through hole 202 and/or the housing through hole 117.

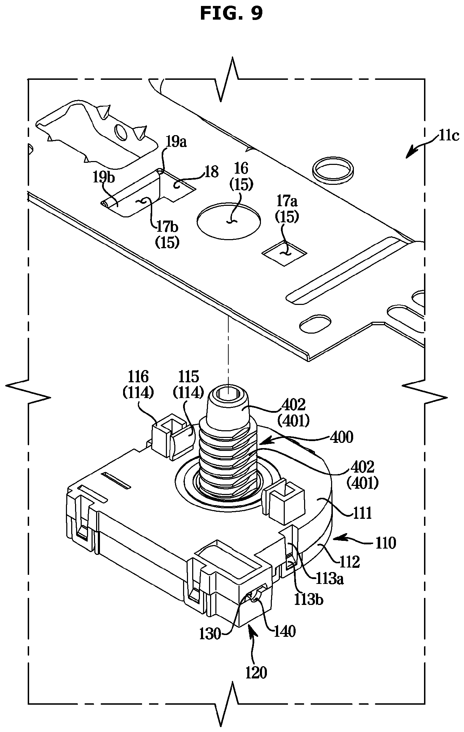

FIG. 9 is a perspective view illustrating a process of a height adjustment device being coupled to a main body according to an embodiment.

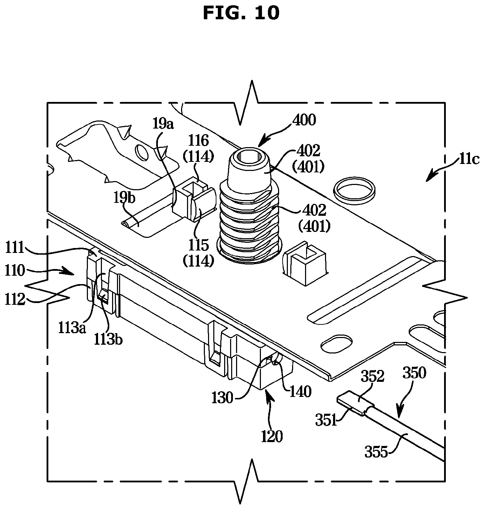

FIG. 10 is a perspective view illustrating a height adjustment device coupled to a main body according to an embodiment.

The height adjustment device 100 may be coupled to the outer case 11. The outer case 11 may include a coupling portion 11c to which the height adjustment device 100 may be coupled. The coupling portion 11c may include a coupling hole 15.

The coupling hole 15 may include a housing coupling hole 17. The housing coupling hole 17 may be provided such that a coupling protrusion 114 of the height adjustment device 100 may be coupled thereto. The housing coupling hole 17 may include a first housing coupling hole 17a and a second housing coupling hole 17b.

The first housing coupling hole 17a may be provided corresponding to the shape of the coupling protrusion 114. The first housing coupling hole 17a may have a quadrangular shape.

The second housing coupling hole 17b may include a fitting portion 18 and an extension portion 19 extending from the fitting portion 18. The fitting portion 18 may be provided corresponding to the shape of the coupling protrusion 114. The extension portion 19 may be extended from the fitting portion 18.

A first extension portion 19a may extend from the fitting portion 18 to secure a coupling space, to facilitate coupling and/or separation of the coupling protrusion 114 coupled to the second housing coupling hole 17b. Therefore, the second housing coupling hole 17b may be formed larger than the size of the coupling protrusion 114, thereby facilitating the coupling and/or separating of the coupling protrusion 114.

A second extension portion 19b may be bent from the fitting portion 18. The second extension portion 19b may be extended from the first extension portion 19a. The second extension portion 19b may allow the coupling protrusion 114 to access the coupling portion 11c of the outer case 11 even at a rotated angle and thus be easily coupled to the coupling portion 11c of the outer case 11. In addition, the rigidity of the coupling portion 11c may be improved by the second extension portion 19b.

After coupling one of the coupling protrusions 114 to the first housing coupling hole 17a, the remaining coupling protrusion 114 may be coupled to the second housing coupling hole 17b. In this case, by pressing the hook portion 115 coupled to the first housing coupling hole 17a, the remaining coupling protrusion 114 may be easily coupled to the second housing coupling hole 17b.

Since the second housing coupling hole 17b includes the extension portion 19, a space in which the coupling protrusion 114 may be coupled is secured, and the coupling protrusion 114 may be coupled more easily.

When coupling the coupling protrusion 114 to the housing coupling hole 17, the boss portion 116 may be coupled to the housing coupling hole 17 first, and then the hook portion 115 may be pressed and coupled to the housing coupling hole 17.

When separating the height adjustment device 100 from the coupling portion 11c of the outer case 11, the hook portion 115 may be pressed to easily separate the coupling protrusion 114 from the housing coupling hole 17.

The coupling hole 15 may include a leg hole 16. The leg hole 16 may be provided such that the leg 400 of the height adjustment device 100 may be coupled thereto. The leg 400 may pass through the leg hole 16. The leg hole 16 may be provided corresponding to the shape of the leg 400. The leg hole 16 may have a circular shape. The leg hole 16 may be placed between the first housing coupling hole 17a and the second housing coupling hole 17b.

Referring to FIG. 10, the housing 110 of the height adjustment device 100 may be fixed to the coupling portion 11c of the outer case 11. By inserting the worm shaft 350 into the housing 110 and rotating the worm wheel 200, the housing 110 may be raised and lowered. In this case, since the coupling portion 11c of the outer case 11 is in a state of being coupled to the housing 110, the outer case 11 may be raised and lowered together with the raising and lowering of the housing 110.

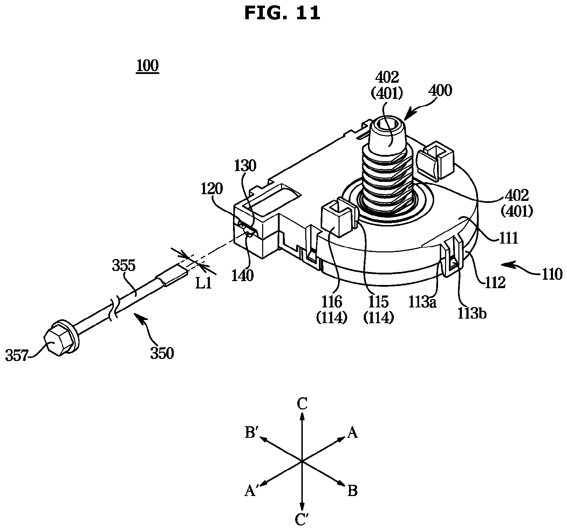

FIG. 11 is a perspective view illustrating a worm shaft separated from a height adjustment device according to an embodiment.

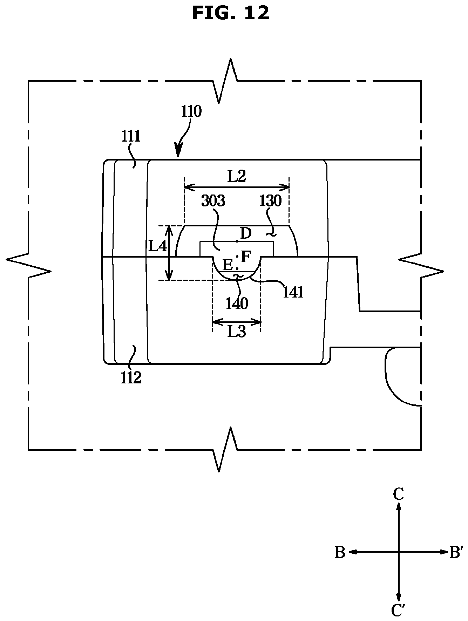

FIG. 12 is an enlarged view of a locking portion of a height adjustment device according to an embodiment.

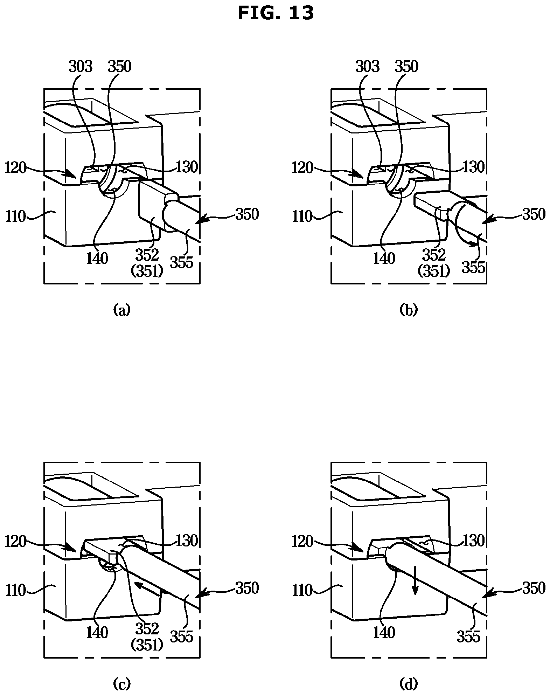

FIG. 13 is a view illustrating a process of inserting a worm shaft of a height adjustment device into a housing according to an embodiment.

The worm shaft 350 may be provided outside the housing 110. The worm shaft 350 may be inserted into the housing 110. The worm shaft 350 may be attached to and detached from the worm 300. The worm shaft 350 may be coupled to and separated from the worm 300.

The height adjustment device 100 may include a locking portion 120. The locking portion 120 may prevent the worm shaft 350 coupled to the worm 300 from being separated from the housing 110. The locking portion 120 may be formed in the housing 110.

However, the present disclosure is not limited thereto, and the locking portion 120 may be formed on the worm shaft 350 and/or the worm 300.

For example, one of the worm shaft 350 and the worm 300 may include a metal material, and the other may include a magnet. An attractive force may act between the worm shaft 350 and the worm 300. With the attractive force, the worm shaft 350 may be guided to be coupled to the worm 300, and the worm shaft 350 coupled to the worm 300 may be prevented from being easily separated.

Alternatively, one of the worm shaft 350 and the housing 110 may include a metal material, and the other may include a magnet. In addition, the worm shaft 350 may be coupled to the worm 300 in a forced fit form.

The housing 110 may include a locking portion 120. The locking portion 120 may be provided to allow the worm shaft 350 to move in and out of the housing 110 only at a certain angle and/or in a certain direction.

The rotation axis of the worm shaft 350 may extend along a first direction A-A'. The rib portion 355 may extend along the first direction A-A'.

The insertion portion 351 of the worm shaft 350 may extend along a second direction B-B' perpendicular to the first direction A-A'. The insertion plate 352 may extend along the second direction B-B'.

The locking portion 120 may include a first hole 130 formed in the housing 110. The first hole 130 may be provided to allow the worm shaft 350 to move in and out of the housing 110. The insertion portion 351 of the worm shaft 350 may move in and out through the first hole 130.

The first hole 130 may be extended along the second direction B-B'. The first hole 130 may be formed to have a size equal to or larger than the insertion portion 351 to allow the insertion portion 351 to move in and out therethrough. The first hole 130 may be provided to correspond to the shape of the insertion portion 351. The first hole 130 may have a rectangular shape or an approximately quadrilateral shape corresponding to the shape of the insertion plate 352.

The locking portion 120 may include a second hole 140 formed in the housing 110. The second hole 140 may be formed to extend from the first hole 130. The second hole 140 may extend from the first hole 130 toward a third direction C-C'. The third direction C-C' may be a direction perpendicular to the first direction A-A' and the second direction B-B'. The second hole 140 may be formed by extending upward or downward from the first hole 130. The second hole 140 may extend from an approximate center of the first hole 130.

The second hole 140 may be provided at a position corresponding to the worm hole 303. The center F of the worm hole 303 may be offset to be directed from the first hole 130 toward the second hole 140. With respect to the second direction B-B' and the third direction C-C', the center F of the worm hole 303 may be arranged to be directed from the center D of the first hole 130 to the center E of the second hole 140. The center F of the worm hole 303 may be offset from the center D of the first hole 130 to the upper or lower side.

The second hole 140 may guide the movement position of the worm shaft 350. The second hole 140 may guide the movement position of the worm shaft 350 such that the worm shaft 350 inserted into the housing 110 through the first hole 130 is coupled to the worm 300. Specifically, after the insertion plate 352 is inserted into the housing 110 through the first hole 130, the rib portion 355 may be moved to the upper side or lower side, in which the second hole 140 is located, so that the insertion plate 352 may be coupled to the worm 300.

The second hole 140 may include a curve 141. The second hole 140 may include a curve 141 corresponding to the shape of the rib portion 355 such that the worm shaft 350 coupled to the worm 300 may be easily rotated. The second hole 140 may have a semicircular shape.

The first hole 130 may be provided in one of the upper housing 111 or the lower housing 112, and the second hole 140 may be provided in the other one of the upper housing 111 or the lower housing 112. Alternatively, the first hole 130 and the second hole 140 may be integrally formed with each other.

With respect to the second direction B-B', a length L2 of the first hole 130 may be provided to be equal to or greater than a length L1 of the insertion portion 351. Accordingly, the insertion plate 352 may pass through the first hole 130.

With respect to the second direction B-B', a length L2 of the second hole 140 may be provided to be smaller than a length L1 of the insertion portion 351. With respect to the third direction C-C', a maximum length L4 extending from the first hole 130 to the second hole 140 may be provided to be smaller than the length L1 of the insertion portion 351 in the second direction B-B'. Therefore, the insertion plate 352 may not pass through the second hole 140, and unless being inserted in parallel with the second direction B-B' in which the first hole 130 extends, the insertion plate 352 may not pass through the locking portion 120.

This will be described in detail with reference to FIGS. 13A to 13D. Referring to FIG. 13A, when the insertion plate 352 of the worm shaft 350 is not arranged to coincide with the extension direction of the first hole 130, the worm shaft 350 may not be inserted into the housing 110. Therefore, the user rotates the worm shaft 350 such that the insertion plate 352 is arranged to coincide with the extension direction of the first hole 130 as shown in FIG. 13B. Then, referring to FIG. 13C, the user inserts the insertion plate 352 into the first hole 130 to insert the worm shaft 350 into the housing 110. In this case, the insertion plate 352 may not pass through the second hole 140, and thus the user needs to insert the insertion plate 352 such that the insertion plate 352 is directed toward the upper side in which the first hole 130 is located in the locking portion 120. Thereafter, referring to FIG. 13D, the worm shaft 350 may be moved toward the lower side in which the second hole 140 is formed, thereby coupling the insertion plate 352 to the worm hole 303. Then, the worm shaft 350 may be rotated to rotate the worm 300.

Conversely, in order to withdraw the worm shaft 350 from the housing 110, the worm shaft 350 is separated from the worm hole 303. Then, the worm shaft 350 is moved toward the upper side in which the first hole 130 is formed. Afterwards, the worm shaft 350 is rotated such that the insertion plate 352 is arranged in line with the extension direction of the first hole 130, allowing the insertion plate 352 to pass through the first hole 130 and exit. Afterwards, the insertion plate 352 may be withdrawn through the first hole 130.

That is, in order for the worm shaft 350 to be separated from the worm hole 303 and separated to the outside of the housing 110, the worm shaft 350 needs to move from the second hole 140 toward the first hole 130, and also rotate to be aligned with the extension direction of the first hole 130. That is, the locking portion 120 may be provided such that the worm shaft 350 may be coupled to and/or separated from the worm hole 303 only in a specific direction. Therefore, the worm shaft 350 may be prevented from being easily separated from the housing 110.

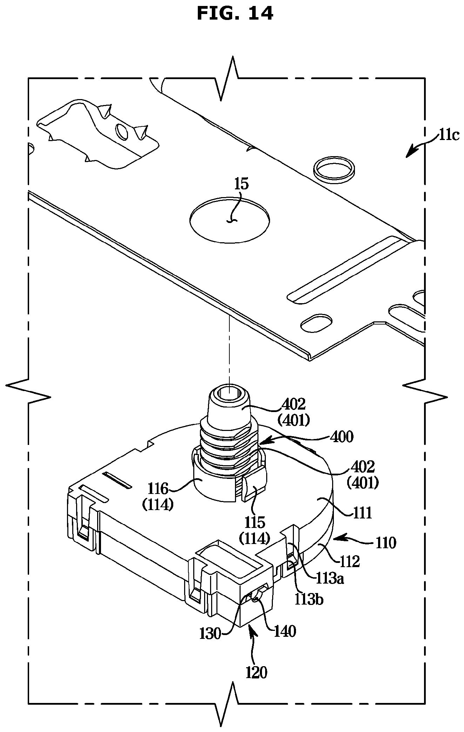

FIG. 14 is a perspective view illustrating a process of a height adjustment device being coupled to a main body according to an embodiment.

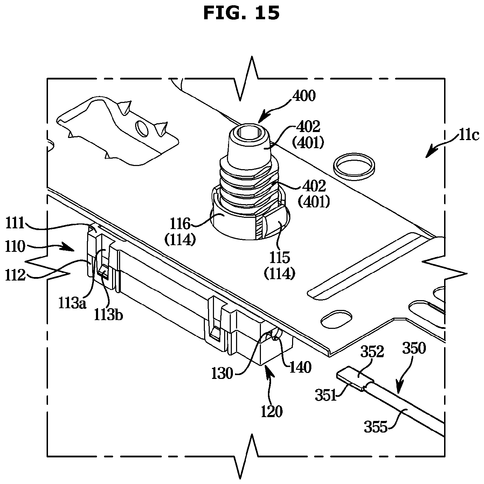

FIG. 15 is a perspective view illustrating a height adjustment device coupled to a main body according to an embodiment.

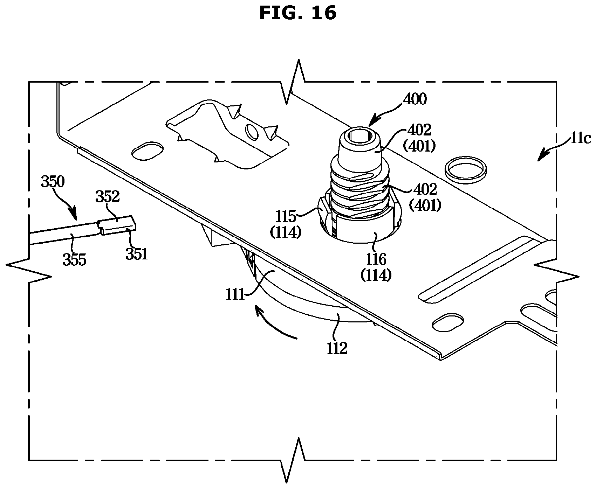

FIG. 16 is a perspective view illustrating a process of a height adjustment device being coupled to a main body and rotated according to an embodiment.

The outer case 11 may include a coupling hole 15. The height adjustment device 100 may include a coupling protrusion 114. The coupling protrusion 114 may extend along the circumference of the upper housing through hole 117a. The coupling protrusion 114 may be arranged to surround a circumference of the leg 400. The coupling protrusion 114 may include a screw shape. The coupling protrusion 114 may include a hook portion 115 and a boss portion 116.

The coupling protrusion 114 may be coupled to the coupling hole 15. The coupling hole 15 may be formed in a circular shape corresponding to the coupling protrusion 114. Referring to FIG. 16, the height adjustment device 100 coupled to the outer case 11 may rotate with respect to the outer case 11. The worm shaft 350 may be inserted into the housing 110 from various directions according to the rotation of the housing 110. Accordingly, the user's accessibility to the height adjustment device 100 may be improved.

Meanwhile, the coupling protrusion 114 may include a screw shape on the outer circumferential surface, and thus may be easily rotated while coupled to the coupling hole 15. Details that overlap the above description are omitted below.

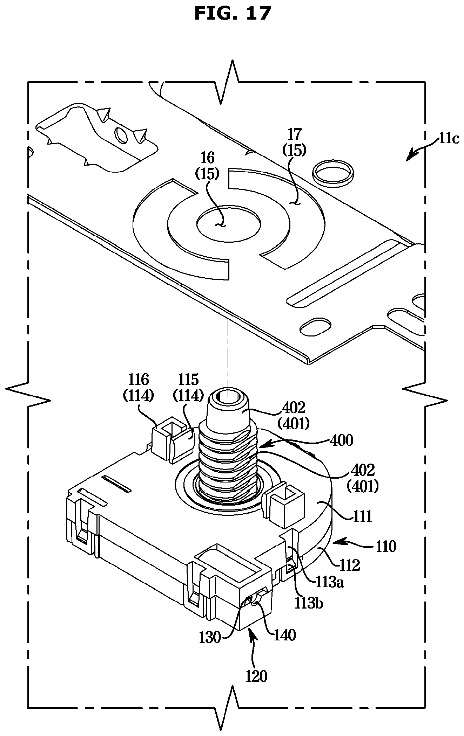

FIG. 17 is a perspective view illustrating a process of a height adjustment device being coupled to a main body according to an embodiment.

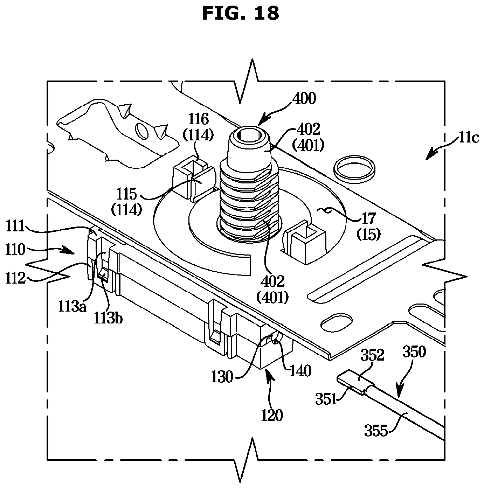

FIG. 18 is a perspective view illustrating a height adjustment device coupled to a main body according to an embodiment.

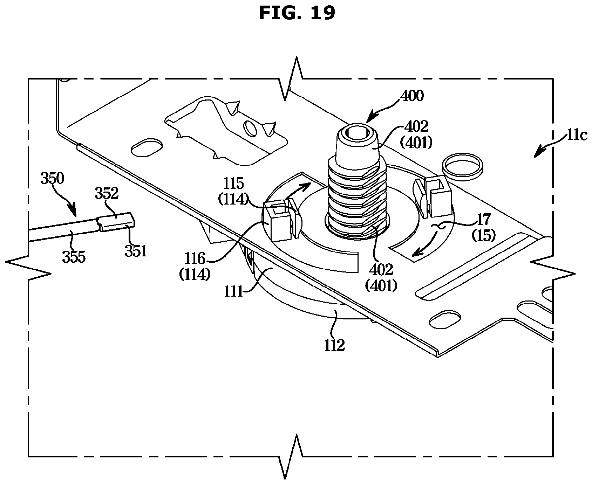

FIG. 19 is a perspective view illustrating a process of a height adjustment device being coupled to a main body and rotated according to an embodiment.

The outer case 11 may include a coupling hole 15. The coupling hole 15 may include a leg hole 16 and a housing coupling hole 17. The housing coupling hole 17 may extend along the circumference.

The coupling protrusion 114 may be coupled to the housing coupling hole 17. The coupling protrusion 114 coupled to the housing coupling hole 17 may rotate along the circumference. Referring to FIG. 19, the height adjustment device 100 coupled to the outer case 11 may rotate relative to the outer case 11. With the rotation of the housing 110, the worm shaft 350 may be inserted into the housing 110 in various directions. Details that overlap the above description are omitted.

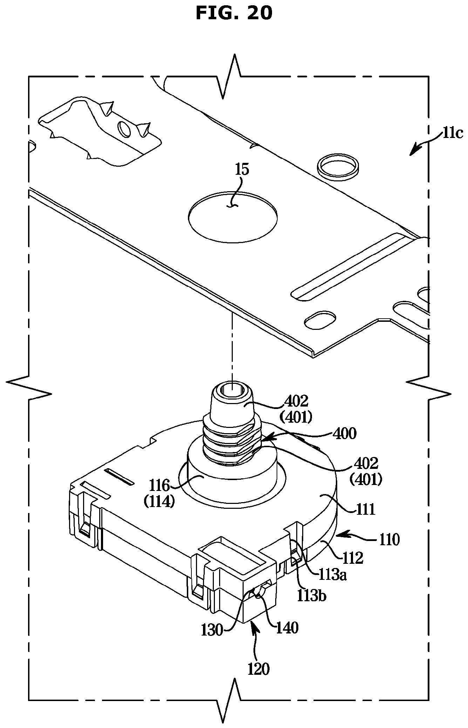

FIG. 20 is a perspective view illustrating a process of a height adjustment device being coupled to a main body according to an embodiment.

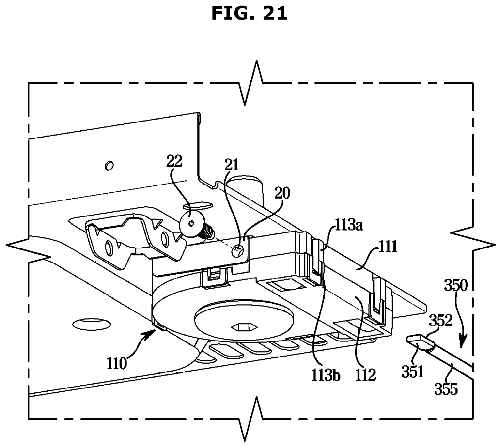

FIG. 21 is a perspective view of a process of a height adjustment device being coupled to a main body according to an embodiment, when viewed from below.

The outer case 11 may include a coupling hole 15. The height adjustment device 100 may include a coupling protrusion 114. The coupling protrusion 114 may include a boss portion 116. The boss 116 may extend along the circumference of a upper housing through hole 117a. The boss portion 116 may be arranged to surround the leg 400.

Meanwhile, the coupling protrusion 114 may include a screw shape on the outer circumferential surface, and thus may be easily rotated while coupled to the coupling hole 15.

The coupling protrusion 114 may be coupled to the coupling hole 15. Referring to FIG. 21, the outer case 11 may include a fastening plate 20. The fastening plate 20 may face a side portion of the housing 110. The fastening plate 20 may include a fastening hole 21. The fastening plate 20 and the side portion of the housing 110 may be coupled by a fastening screw 22. The height adjustment device 100 may be fixed to the outer case 11. Details that overlap the above description are omitted.

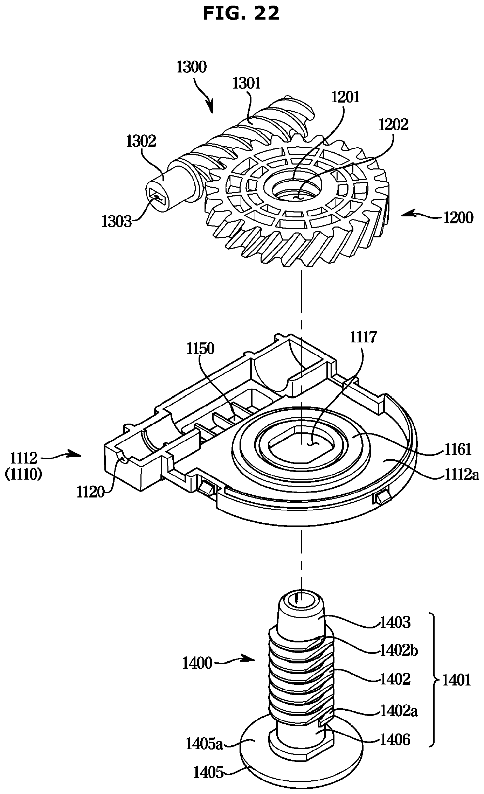

FIG. 22 is an exploded perspective view illustrating components of a height adjustment device according to an embodiment.

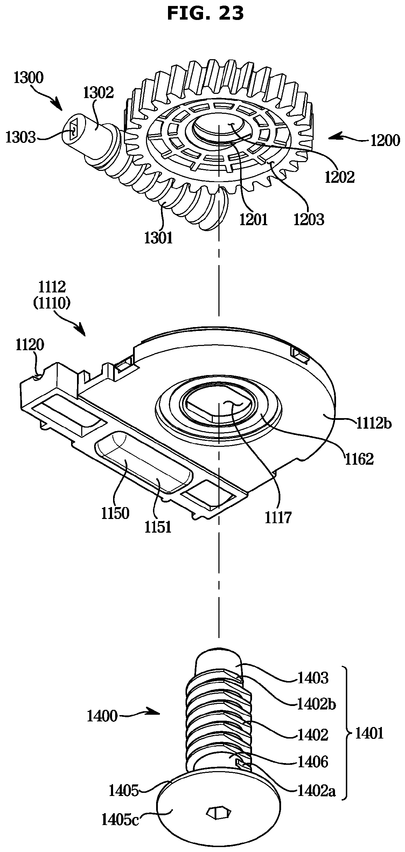

FIG. 23 is an exploded perspective view illustrating components of a height adjustment device according to an embodiment.

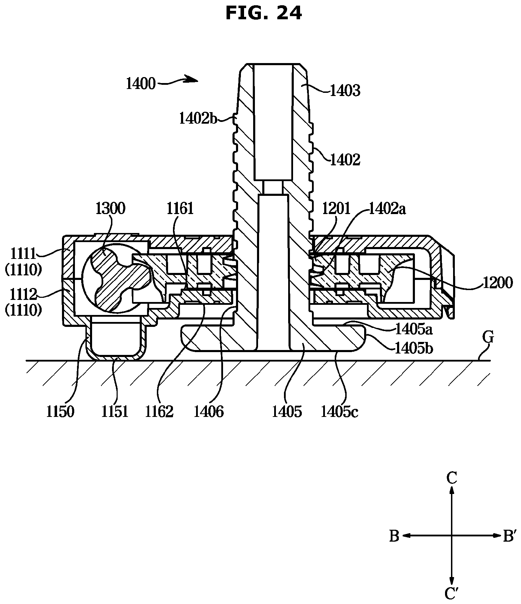

FIG. 24 is a cross-sectional view illustrating a height adjustment device according to an embodiment.

The height adjustment device 100 may include a lower housing 1112, a worm 1300, a worm wheel 1200, and a leg 1400. In addition, the height adjustment device 100 may include components of an upper housing and a shaft; however, details that overlap the previous description are omitted.

The leg 1400 may be provided to pass through a housing through hole 1117 and/or a worm wheel through hole 1202.

The leg 1400 may include a leg body 1401 provided to pass through the lower housing 1112. The leg body 1401 may be formed to protrude upward from a support plate 1405. The leg body 1401 may pass through the housing through hole 1117 and the worm wheel through hole 1202.

The leg 1400 may include a support plate 1405 provided on the lower side of the leg body 1401. The support plate 1405 may support the leg body 1401. The support plate 1405 may be in contact with the ground. The support plate 1405 may have a circular plate shape. The support plate 1405 may be provided to have a cross-sectional area larger than that of the leg body 1401.

The support plate 1405 may have a constant thickness. The support plate 1405 may include a support plate 1405a and a support plate lower surface 1405c. The support plate 1405a may be connected to the leg body 1401. The support plate lower surface 1405c may be arranged to face the ground G. The support plate lower surface 1405c may be arranged on the opposite side of the support plate 1405a.

The leg body 1401 may include a male thread portion 1402. A screw thread may be formed on an outer circumferential surface of the male thread portion 1402. The male thread portion 1402 may be engaged with a female thread portion 1201 of the worm wheel 1200.

The male thread portion 1402 may include a male thread portion top 1402b and a male thread portion bottom 1402a. The male thread portion bottom 1402a may be arranged adjacent to the ground G. The male thread portion top 1402b may be arranged on the opposite side of the male thread portion bottom 1402a.

The male thread portion 1402 may include a screw thread extending from the male thread portion top 1402b to the male thread portion bottom 1402a.

The leg body 1401 may include a head portion 1403. The head portion 1403 may be provided at one end of the male thread portion 1402. The head portion 1403 may be arranged adjacent to the male thread portion top 1402b.

The head portion 1403 may be provided at one end of the male thread portion 1402 adjacent to the outer case 11. The head portion 1403 may be arranged at the upper portion of the male thread portion 1402. The head portion 1403 may not have screw threads. The head portion 1403 may be arranged at the upper portion of the male thread portion top 1402b.

The leg body 1401 may include an idling portion 1406. The idling portion 1406 may be provided at the other end of the male thread portion 1402. The idling portion 1406 may be provided on the lower portion of the male thread portion 1402. The idling portion 1406 may be provided at the opposite side of the head portion 1403.

The idling portion 1406 may be provided adjacent to the support plate 1405. The idling portion 1406 may be arranged adjacent to the support plate 1405a. The idling portion 1406 may be arranged adjacent to the male thread portion bottom 1402a. The idling portion 1406 may be arranged on the lower portion of the male thread portion bottom 1402a.

The idling portion 1406 may not have screw threads. The idling portion 1406 may have a cylindrical shape.

The outer circumferential surface of the idling portion 1406 may include a smooth surface. The outer circumferential surface of the idling portion 1406 may include a curved surface. The cross-sectional area of the idling portion 1406 may be formed smaller than the cross-sectional area of the male thread portion 1402.

Since the idling portion 1406 does not have a screw thread, the idling portion 1406 may not engage with the female thread portion 1201 of the worm wheel 1200.

The idling portion 1406 may be provided to allow the worm wheel 1200 to idle relative to the leg 1400. The idling portion 1406 may be provided to allow the female thread portion 1201 of the worm wheel 1200 to idle relative to the leg body 1401.

The idling portion 1406 may be provided to allow the leg 1400 to idle while being inserted into the worm wheel 1200. The idling portion 1406 may be provided to allow the leg body 1401 to idle in the worm wheel through hole 1202.

When the user desires to lower the height of the refrigerator 1, he/she may lower the housing 110 of the height adjustment device 100 by rotating the worm shaft 1350. Specifically, by rotating the worm shaft 1350, the worm 1300 coupled to the worm shaft 1350 may be rotated, and the worm wheel 1200 may be lowered while rotating relative to the leg 1400. In this case, the worm wheel 1200 may be lowered as the female thread portion 1201 of the worm wheel 1200 is engaged with the male thread portion 1402 of the leg body 1401.

Meanwhile, the worm wheel 1200 may descend along the mail screw portion 1402 of the leg body 1401 until reaching the idling portion 1406 of the leg body 1401. Since the idling portion 1406 does not have screw threads, the worm wheel 1200 may no longer engage with the leg 1400. Accordingly, even when the worm shaft 1350 and the worm 1300 continue to rotate, the worm wheel 1200 idles relative to the leg 1400. The worm wheel 1200 may no longer descend. The housing 1110 may no longer descend. Accordingly, this may prevent the housing 1110 from pressing against and damaging the support plate 1405 of the leg 1400. In addition, the housing 1110 may be prevented from being damaged by contact with the ground.

Therefore, the user may rotate the worm shaft 1350 without worrying about the support plate 1405 of the leg 1400 being damaged even when the worm wheel 1200 descends to the lowest point of the leg 1400. Since the worm wheel 1200 may not descend further from the leg body 1401 due to the idling portion 1406, the support plate 1405 of the leg 1400 is protected from being damaged even when the user rotates the worm shaft 1350 in both directions. This may enhance the convenience of use.

On the other hand, when the user desires to increase the height of the refrigerator 1, the user may raise the housing 1110 of the height adjustment device 100 by rotating the worm shaft 1350 in the opposite direction. In this case, the female thread portion 1201 of the worm wheel 1200 needs to be raised in engagement with the male thread portion 1402 of the leg body 1401.

When the female thread portion 1201 of the worm wheel 1200 is in contact with and the idling portion 1406 of the leg body 1401, the worm wheel 1200 is only idling relative to the leg 1400 without moving upward. However, in a state in which the male thread portion bottom 1402a is resting on the female thread portion 1201 of the worm wheel 1200 due to the weight of the leg 1400, the female thread portion 1201 and the male thread portion 1402 may be engaged through the rotation of the worm wheel 1200. As a result, the worm wheel 1200 may rotate relative to the leg 1400 and move upward again.

That is, the male thread portion bottom 1402a may be resting on the female thread portion 1201 of the worm wheel 1200 by the weight of the leg 1400. For the male thread portion bottom 1402a to rest on the female thread portion 1201 of the worm wheel 1200, the leg 1400 needs to be in a state of being separated from the ground G.

The housing 1110 may include a bumper 1150. The bumper 1150 may be provided to separate the leg 1400 from the ground G. The bumper 1150 may be provided to separate the support plate 1405 from the ground G.

The lower housing 1112 may include the bumper 1150. The bumper 1150 may be a portion of the lower housing 1112 that protrudes toward the ground G. The bumper 1150 may be a portion of the lower housing 1112 that protrudes downward.

The bumper 1150 may include a bumper protrusion surface 1151 that is provided to contact the ground G. The bumper protrusion surface 1151 may include a flat surface and/or a curved surface.

The lower housing 1112 may include a lower housing outer surface 1112b arranged to face the ground G and a lower housing inner surface 1112a arranged opposite the lower housing outer surface 1112b.

The lower housing 1112 may include a housing recessed portion 1162. The housing recessed portion 1162 may be formed on the lower housing outer surface 1112b. The housing recessed portion 1162 may be at least a portion of the lower housing outer surface 1112b that is recessed.

The housing recessed portion 1162 may be a portion of the lower housing outer surface 1112b being recessed toward the lower housing inner surface 1112a. The housing recessed portion 1162 may be formed to be recessed upward from the ground G.

The housing recessed portion 1162 may be provided to accommodate at least a portion of the leg 1400. The housing recessed portion 1162 may be provided to accommodate at least a portion of the support plate 1405.

The housing recessed portion 1162 may have an approximately circular shape. The housing recessed portion 1162 may have a shape corresponding to the support plate 1405 of the leg 1400. The housing recessed portion 1162 may correspond to the support plate 1405a.

The lower housing 1112 may include a housing protrusion portion 1161. The housing protrusion portion 1161 may be formed on the lower housing inner surface 1112a. The housing protrusion portion 1161 may be at least a portion of the lower housing inner surface 1112a that protrudes.

The housing protrusion portion 1161 may have an approximately circular shape. The housing protrusion portion 1161 may be a portion formed corresponding to the housing recessed portion 1162. The housing protrusion portion 1161 may be provided on the opposite side of the housing recessed portion 1162. The housing protrusion portion 1161 may correspond to the shape of the housing recessed portion 1162.

A housing through hole 1117 may be formed in the housing recessed portion 1162 and the housing protrusion portion 1161. The housing through hole 1117 may be provided to pass through the housing recessed portion 1162 and the housing protrusion portion 1161.

The housing recessed portion 1162 may be provided to accommodate the support plate 1405 of the leg 1400. The housing recessed portion 1162 may be provided to accommodate at least a portion of the leg 1400, thereby increasing the range in which the housing 1110 may be raised and lowered relative to the leg 1400.

For example, when the lower housing 1112 does not include the configuration of the housing recessed portion 1162, the range in which the housing 1110 may be raised and lowered relative to the leg 1400 may be from the support plate 1405a to the male thread portion top 1402b. On the other hand, when the lower housing 1112 includes the configuration of the housing recessed portion 1162, the range in which the housing 1110 may be raised and lowered relative to the leg 1400 may be from a middle point 1405b of the support plate 1405 to the male thread portion top 1402b.

That is, the housing recessed portion 1162 may increase the range in which the height adjustment device 100 may be raised and lowered. Accordingly, the degree of freedom in installing the height adjustment device 100 may be increased.

For example, when the height of the lower housing 1112 is 10 mm, the depth of the housing recessed portion 1162 may be approximately 3 mm. Accordingly, the overall height of the height adjustment device 100 may be reduced by 3 mm, and the minimum height required for installation of the height adjustment device 100 may also be reduced by 3 mm. However, the present disclosure is not limited thereto.

As the housing recessed portion 1162 is provided in the lower housing 1112, the housing protrusion portion 1161 may be formed. The worm wheel 1200 may include a worm wheel recessed portion 1203 corresponding to the housing protrusion portion 1161.

The worm wheel 1200 may include the worm wheel recessed portion 1203 provided to form an empty space. The worm wheel recessed portion 1203 may be provided such that the worm wheel 1200 is seated in the housing 1110. The worm wheel recessed portion 1203 may be provided such that the worm wheel 1200 is seated in the housing protrusion portion 1161.

The worm wheel recessed portion 1203 may be recessed from the lower surface of the worm wheel 1200 toward the upper side.

The worm wheel recessed portion 1203 may be in contact with the housing protrusion portion 1161. The worm wheel recessed portion 1203 may have a shape corresponding to the housing protrusion portion 1161.

The worm wheel recessed portion 1203 may be formed on the lower portion of the worm wheel 1200. The worm wheel recessed portion 1203 may be formed at a portion of the worm wheel 1200 facing the lower housing 1112.

Since the worm wheel 1200 includes the worm wheel recessed portion 1203, the overall weight of the worm wheel 1200 may be minimized.

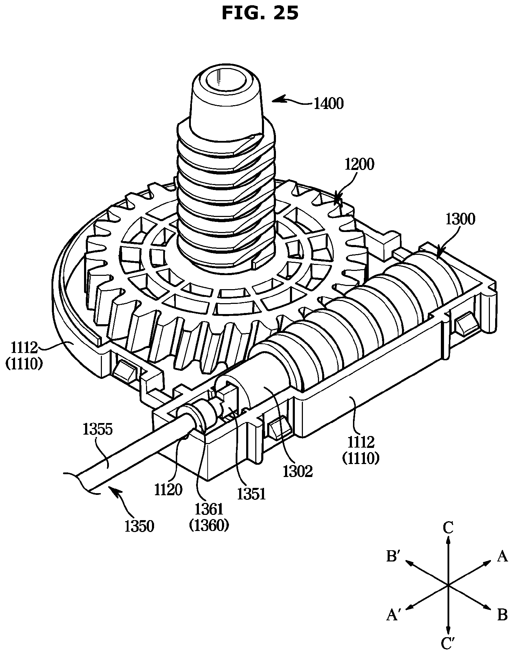

FIG. 25 is a perspective view illustrating a height adjustment device according to an embodiment.

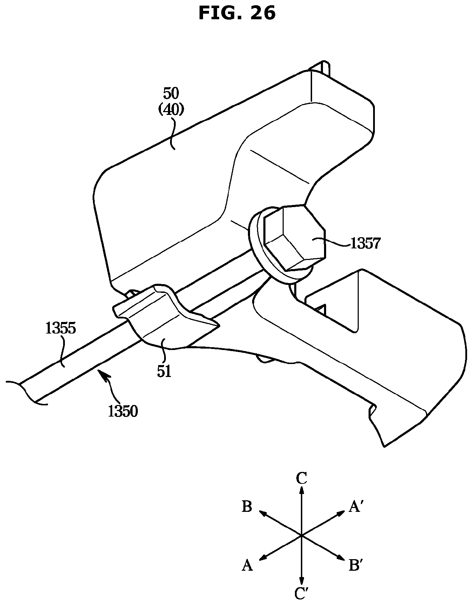

FIG. 26 is a perspective view illustrating a worm shaft of a height adjustment device coupled to a surrounding structure according to an embodiment.

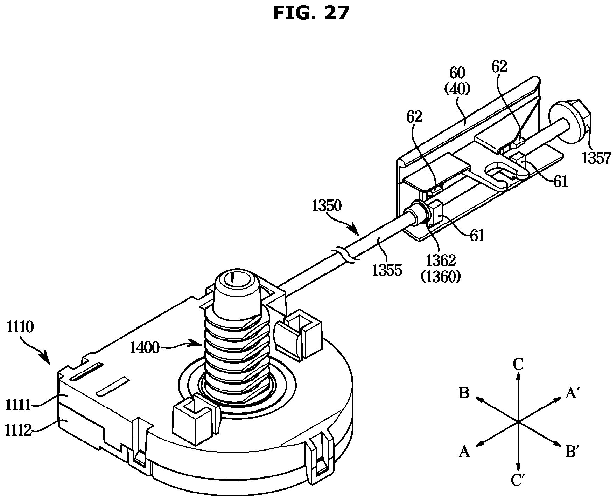

FIG. 27 is a perspective view illustrating a worm shaft of a height adjustment device coupled to a surrounding structure according to an embodiment.

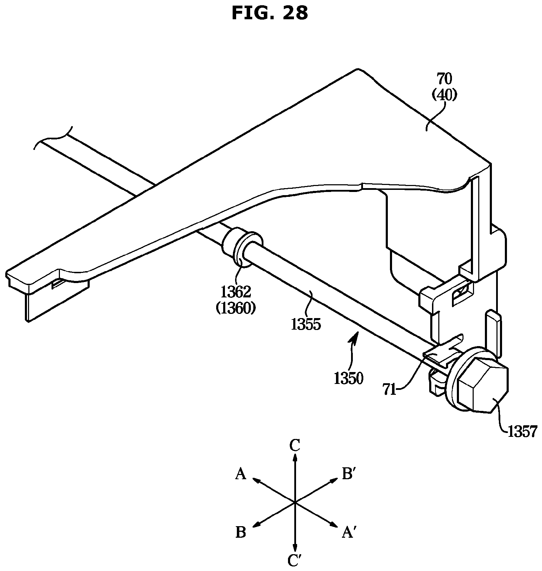

FIG. 28 is a perspective view illustrating a worm shaft of a height adjustment device coupled to a surrounding structure according to an embodiment.

The worm shaft 1350 may include a worm shaft catching portion 1360 provided to prevent separation from the height adjustment device 100. The worm shaft catching portion 1360 may be provided to prevent the worm shaft 1350 from being separated from the housing 1110. The worm shaft catching portion 1360 may be provided to prevent the worm shaft 1350 from being separated from the worm 1300.

Referring to FIG. 25, a worm shaft catching portion 1361 may be formed on the rib portion 1355. The worm shaft catching portion 1361 may be provided to be adjacent to the worm shaft insertion portion 1351.

The worm shaft catching portion 1361 may have a circular plate shape. The worm shaft catching portion 1361 may have a disk shape. However, the present disclosure is not limited thereto, and the worm shaft catching portion 1361 may have various shapes.

The cross-sectional area of the worm shaft catching portion 1361 may be provided to be larger than the cross-sectional area of the rib portion 1355.

The worm shaft catching portion 1361 may be provided to be larger than the locking portion 1120 of the housing 1110. The area of the worm shaft catching portion 1361 may be provided to be larger than the area of the locking portion 1120. The worm shaft catching portion 1361 may be provided not to pass through the locking portion 1120.

Accordingly, the worm shaft catching portion 1361 disposed inside the housing 1110 may not move toward the outside of the housing 1110. The worm shaft catching portion 1361 may restrain the movement of the worm shaft 1350. The worm shaft catching portion 1361 may restrain the worm shaft 1350 from moving in the A-A' direction.

In FIG. 25, a state in which the worm shaft 1350 is inserted into the worm 1300 is illustrated. The worm shaft 1350 inserted into the worm 1300 may not be separated from the worm 1300. The worm shaft 1350 may remain inserted into the worm 1300. In this case, the height adjustment device 100 may be installed in the refrigerator 1 while the worm shaft 1350is inserted.

Referring to FIGS. 26 to 28, the refrigerator 1 may include a worm shaft fixing portion 40. The worm shaft fixing portion 40 may be coupled to the outer case 11 of the refrigerator 1.

The worm shaft fixing portion 40 may be provided to prevent the worm shaft 1350 from being separated from the height adjustment device 100. The worm shaft fixing portion 40 may be provided to prevent the worm shaft 1350 from being separated from the housing 1110. The worm shaft fixing portion 40 may be provided to prevent the worm shaft 1350 from being separated from the worm 1300.

Referring to FIG. 26, the worm shaft fixing portion 50 may be coupled to the hinge 35 of the door 30 of the refrigerator 1.

The worm shaft fixing portion 50 may include a fixing protrusion 51. The fixing protrusion 51 may have a hook shape. The fixing protrusion 51 may be provided to fix the worm shaft 1350.

The fixing protrusion 51 may fix the rib portion 1355 of the worm shaft 1350. The fixing protrusion 51 may prevent the rib portion of the worm shaft 1350 from moving. The worm shaft 1350 may be inserted into an accommodation space formed by the fixing protrusion 51 and fixed to the worm shaft fixing portion 50.

The fixing protrusion 51 may restrain the worm shaft 1350 from moving in the A-A' direction and/or the C-C' direction.

The embodiments of FIGS. 25 and 26 may be combined.

Referring to FIG. 27, the refrigerator 1 may include a worm shaft fixing portion 60. The worm shaft fixing portion 60 may be coupled to the outer case 11 of the refrigerator 1.

The worm shaft fixing portion 60 may include a first fixing protrusion 61 and a second fixing protrusion 62. The first fixing protrusion 61 and/or the second fixing protrusion 62 may be provided to fix the worm shaft 1350. The first fixing protrusion 61 may be provided in plural. The second fixing protrusion 62 may be provided in plural.

The first fixing protrusion 61 and/or the second fixing protrusion 62 may fix the rib portion 1355 of the worm shaft 1350. The first fixing protrusion 61 and the second fixing protrusion 62 may form a space into which the worm shaft 1350 may be inserted. The worm shaft 1350 may be inserted into the accommodation space formed by the first fixing protrusion 61 and the second fixing protrusion 62 and fixed to the worm shaft fixing portion 60.

The first fixing protrusion 61 may restrain the worm shaft 1350 from moving in the A-A' direction and/or the B-B' direction. The second fixing protrusion 62 may restrain the worm shaft 1350 from moving in the C-C' direction.

The worm shaft 1350 may include a worm shaft catching portion 1362. The worm shaft catching portion 1362 may be formed on the rib portion 1355. The worm shaft catching portion 1362 may be arranged to be adjacent to a handle portion 1357.

The worm shaft catching portion 1362 may have a circular plate shape. The worm shaft catching portion 1362 may have a disk shape. The cross-sectional area of the worm shaft catching portion 1362 may be provided to be larger than the cross-sectional area of the rib portion 1355.

The worm shaft catching portion 1362 may be provided to be larger than the accommodation space formed by the first fixing protrusion 61 and the second fixing protrusion 62. The worm shaft catching portion 1362 may be provided not to pass through the accommodation space formed by the first fixing protrusion 61 and the second fixing protrusion 62.

The worm shaft catching portion 1362 may be provided to restrain the worm shaft 1350 from moving in the A-A' direction and/or the B-B' direction and/or the C-C' direction.

Referring to FIG. 28, the refrigerator 1 may include a worm shaft fixing portion 70. The worm shaft fixing portion 70 may be coupled to a hinge 35 of a door 30 of the refrigerator 1.

The worm shaft fixing portion 70 may include a fixing protrusion 71. The fixing protrusion 71 may have a hook shape. The fixing protrusion 71 may be provided to fix the worm shaft 1350.

The fixing protrusion 71 may fix the rib portion 1355 of the worm shaft 1350. The fixing protrusion 71 may prevent the rib portion of the worm shaft 1350 from moving. The worm shaft 1350 may be inserted into an accommodation space formed by the fixing protrusion 71 and fixed to the worm shaft fixing portion 70.

The fixed protrusion 71 may restrain the worm shaft 1350 from moving in the A-A' direction and/or the B-B' direction and/or the C-C' direction.

The worm shaft catching portion 1362 may be provided not to pass through the accommodation space formed by the fixed protrusion 71. The worm shaft catching portion 1362 may be provided to restrain the worm shaft 1350 from moving in the A-A' direction and/or the B-B' direction and/or the C-C' direction.

The worm shaft fixing portion 60 shown in FIG. 27 may be arranged on the left side of the refrigerator 1, and the worm shaft fixing portion 70 shown in FIG. 28 may be arranged on the right side of the refrigerator 1. Alternatively, the worm shaft fixing portion 60 and the worm shaft fixing portion 70 may be arranged in the opposite arrangement. However, the present disclosure is not limited thereto.

The worm shaft fixing portion 40 may also be provided as a magnet. The worm shaft fixing portion 40 may also fix the worm shaft 1350 by magnetism. However, the present disclosure is not limited thereto.

While the disclosure has been shown and described with reference to various embodiments thereof, it will be understood by those skilled in the art that various changes in form and details may be made therein without departing from the spirit and scope of the disclosure as defined by the appended claims and their equivalents.

A home appliance according to an embodiment of the disclosure includes: a main body 10; and a height adjustment device 100 configured to adjust a height of the main body 10 from a ground, wherein the height adjustment device 100 includes: a housing 110 configured to be coupled to a lower portion of the main body 10; a leg 400 arranged to pass through the housing 110 and having a male thread portion 402 formed on an outer circumferential surface thereof; a worm wheel 200 arranged inside the housing 110 and having a female thread portion 201 formed on an inner circumferential surface thereof to correspond to the male thread portion 402 of the leg 400 such that the worm wheel 200 is screw-coupled to the leg 400 to ascend and descend; a worm 300 engaged with the worm wheel 200 to rotate the worm wheel 200; and a worm shaft 350 configured to rotate the worm 300, the worm shaft 350 being attachable to and detachable from the worm 300, wherein the housing 110 includes a locking portion 120 configured to prevent the worm shaft 350 coupled to the worm 300 from being separated from the housing 110. According to the present disclosure, the height adjustment device 100 may be installed in the refrigerator 1 with the worm shaft 350 separated. That is, by installing the height adjustment device 100 with the worm shaft 350 omitted in the refrigerator 1, the manufacturing cost may be reduced. In addition, since the worm shaft 350 is not normally exposed to the outside, the aesthetics may be improved.

The locking portion 120 may include: a first hole 130 configured to allow the worm shaft 350 to enter and exit the housing 110; and a second hole 140 extending from the first hole 130 and guiding a movement position of the worm shaft 350 such that the worm shaft 350 is coupled to the worm 300. According to the present disclosure, the user may be guided to the correct position in which the worm shaft 350 is inserted, so that the convenience of use may be improved.

The worm shaft 350 may include an insertion portion 351 coupled to the worm 300, and the insertion portion 351 may extend in a second direction B-B' perpendicular to a first direction A-A' in which a rotation axis of the worm shaft 350 may extend, and with respect to the second direction B-B', the first hole 130 may have a length L2 greater than or equal to a length L1 of the insertion portion 351, and with respect to the second direction B-B', the second hole 140 may have a length L3 smaller than the length L1 of the insertion portion 351. The second hole 140 may extend from the first hole 130 in a third direction C-C' perpendicular to the first direction A-A' and the second direction B-B'. A maximum length L4 extending from the first hole 130 to the second hole 140 with respect to the third direction C-C' may be smaller than the length L1 of the insertion portion 351 in the second direction B-B'. According to the present disclosure, after the worm shaft 350 is inserted into the worm 300, the worm shaft 350 may be prevented from being easily separated from the worm 300.

The worm 300 may include a worm hole 303 to which the insertion portion 351 of the worm shaft 350 may be coupled, and with respect to the second direction B-B' and the third direction C-C', a center F of the worm hole 303 may be arranged to be directed from a center D of the first hole 130 to a center E of the second hole 140. According to the present disclosure, after the worm shaft 350 is inserted into the worm 300, the worm shaft 350 may be prevented from being easily separated from the worm 300.

The worm hole 303 may include a first worm hole 303a formed at one end of the worm 300 and a second worm hole 303b formed at another end located opposite the one end of the worm 300, and the locking portion 120 may include a first locking portion 120a formed at one end of the housing 110 facing the first worm hole 303a and a second locking portion 120b formed at another end located opposite the one end of the housing 110. According to the present disclosure, the user may insert the worm shaft 350 toward the front or rear of the housing 110. That is, the worm shaft 350 may be inserted in both directions, so the convenience of use may be improved.

The insertion portion 351 of the worm shaft 350 may include an insertion plate 352 having a rectangular shape, and the worm hole 303 may include a first groove 304 corresponding to a shape of the insertion plate 352 and a second groove 305 provided perpendicular to the first groove 304. According to the present disclosure, the insertion plate 352 of the worm shaft 350 may be more easily inserted into the worm hole 303.

The worm shaft 350 may further include a rib portion 355 extending from the insertion portion 351 along the first direction A-A' and having a cylindrical shape, and the second hole 140 may include a curve 141 corresponding to the shape of the rib portion 355. According to the present disclosure, after the worm shaft 350 is inserted into the worm hole 303, the rotation of the worm shaft 350 may be facilitated.

The housing 110 may include an upper housing 111 configured to be coupled to the main body 10 and a lower housing 112 configured to be fastened to the upper housing 111. The first hole 130 may be provided in the upper housing 111, and the second hole 140 may be provided in the lower housing 112. According to the present disclosure, the height adjustment device 100 may be implemented in a simple kit form including a housing 110, so that installation may be facilitated.

The upper housing 111 may include a coupling protrusion 114 protruding toward the main body 10, and the main body 10 may include a coupling hole 15 to which the coupling protrusion 114 may be coupled. According to the present disclosure, the height adjustment device 100 may be easily coupled to the main body 10.

The coupling hole 15 may extend along a circumferential direction. According to the present disclosure, the height adjustment device 100 coupled to the main body 10 may be rotated.

The leg 400 may further include a head portion 403 protruding from the male thread portion 402 toward the main body 10. According to the present disclosure, the outer circumferential surface of the head portion 403 may be formed smoothly, so that the head portion 403 may be easily coupled to the entrance of the worm wheel through hole 202 and/or the housing through hole 117.

The head portion 403 may include an inclined surface 404 sloping upward toward the main body 10 as being close to a center of the circle. According to the present disclosure, since the inclined surface 404 slopes upward toward the center of the worm wheel through hole 202 and/or the housing through hole 117, the leg 400 may be moved toward the center of the worm wheel through hole 202 and/or the housing through hole 117 and thus may be easily coupled.

A height adjustment device according to an embodiment of the disclosure includes: a housing 110; a leg 400 arranged to pass through the housing 110; a worm wheel 200 arranged inside the housing 110 and coupled to the leg 400 to ascend and descend relative to the leg 400; a worm 300 engaged with the worm wheel 200 to rotate the worm wheel 200; a worm shaft 350 configured to rotate the worm 300, the worm shaft 350 being attachable to and detachable from the worm 300; and a locking portion 120 configured to guide the worm shaft 350 to be inserted into the housing 110 and coupled to the worm 300 and prevent the worm shaft 350 coupled to the worm 300 from being separated from the housing 110. According to the present disclosure, after the worm shaft 350 is inserted into the worm 300, the worm shaft 350 may be prevented from being easily separated from the worm 300.

The locking portion 120 may include: a first hole 130 configured to allow the worm shaft 350 to enter and exit the housing 110; and a second hole 140 extending from the first hole 130 and guiding a movement position of the worm shaft 350 such that the worm shaft 350 is coupled to the worm 300. According to the present disclosure, the user may be guided to the correct position in which the worm shaft 350 is inserted, so that the convenience of use may be improved.

The worm shaft 350 may include an insertion portion 351 coupled to the worm 300, and the insertion portion 351 may extend in a second direction B-B' perpendicular to a first direction A-A' in which a rotation axis of the worm shaft 350 may extend, and with respect to the second direction B-B', the first hole 130 may have a length L2 greater than or equal to a length L1 of the insertion portion 351, and with respect to the second direction B-B', the second hole 140 may have a length L3 smaller than the length L1 of the insertion portion 351. The second hole 140 may extend from the first hole 130 in a third direction C-C' perpendicular to the first direction A-A' and the second direction B-B'. A maximum length L4 extending from the first hole 130 to the second hole 140 with respect to the third direction C-C' may be smaller than the length L1 of the insertion portion 351 in the second direction B-B'. According to the present disclosure, after the worm shaft 350 is inserted into the worm 300, the worm shaft 350 may be prevented from being easily separated from the worm 300.

According to the concept of the present disclosure, the accessibility of the height adjustment device can be improved.

According to the concept of the present disclosure, the height adjustment device can be easily coupled to the home appliance, so that the convenience of installation can be improved.

According to the concept of the present disclosure, the worm shaft can be separated from the height adjustment device, so that the aesthetics can be improved.

According to the concept of the present disclosure, the worm shaft can be separated from the height adjustment device, so that the manufacturing cost can be reduced.

According to the concept of the present disclosure, the worm shaft can be detached from the height adjustment device in various directions, so that the accessibility can be improved.

According to the concept of the present disclosure, the worm shaft can be prevented from being easily separated from the worm wheel, so that the convenience of the user can be improved.

According to the concept of the present disclosure, the leg can be easily coupled to the worm wheel, so that the convenience of the user can be improved.

According to the concept of the present disclosure, the damage of the height adjustment device can be prevented.

According to the concept of the present disclosure, the installation usability of the height adjustment device can be increased.

The effects of the present disclosure are not limited to the effects described above, and other effects that are not described will be clearly understood by those skilled in the art from the following description.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A home appliance comprising:
a main body; and
a height adjustment device configured to adjust a height of the main body from a ground,
wherein the height adjustment device comprises:
a housing configured to be coupled to a lower portion of the main body;
a leg arranged to pass through the housing and comprising a male thread portion formed on an outer circumferential surface thereof;
a worm wheel inside the housing and comprising a female thread portion formed on an inner circumferential surface thereof, the female thread portion corresponding to the male thread portion of the leg such that the worm wheel is screw-coupled to the leg to ascend and descend;
a worm engaged with the worm wheel to rotate the worm wheel; and
a worm shaft configured to rotate the worm, the worm shaft being attachable to and detachable from the worm,
wherein the housing comprises a locking portion configured to prevent the worm shaft coupled to the worm from being separated from the housing.

2. The home appliance of claim **1,** wherein the locking portion comprises:
a first hole configured to allow the worm shaft to enter and exit the housing; and
a second hole extending from the first hole and guiding a movement position of the worm shaft such that the worm shaft is coupled to the worm.

3. The home appliance of claim 2, wherein the worm shaft comprises an insertion portion coupled to the worm,
wherein the insertion portion extends in a second direction perpendicular to a first direction in which a rotation axis of the worm shaft extends, and wherein, with respect to the second direction, a length of the first hole is greater than or equal to a length of the insertion portion, and
wherein, with respect to the second direction, a length of the second hole is less than the length of the insertion portion.

4. The home appliance of claim 3, wherein the second hole extends from the first hole in a third direction perpendicular to the first direction and the second direction.

5. The home appliance of claim 4, wherein a maximum length extending from the first hole to the second hole with respect to the third direction is less than the length of the insertion portion in the second direction.

6. The home appliance of claim 4, wherein the worm comprises a worm hole to which the insertion portion of the worm shaft is coupled, and
wherein, with respect to the second direction and the third direction, a center of the worm hole is arranged to be directed from a center of the first hole to a center of the second hole.

7. The home appliance of claim 6, wherein the worm hole comprises a first worm hole formed at one end of the worm and a second worm hole formed at another end located opposite the one end of the worm, and
wherein the locking portion comprises a first locking portion formed at one end of the housing facing the first worm hole and a second locking portion formed at another end located opposite the one end of the housing.

8. The home appliance of claim 6, wherein the insertion portion of the worm shaft comprises an insertion plate having a rectangular shape, and
wherein the worm hole comprises a first groove corresponding to a shape of the insertion plate and a second groove provided perpendicular to the first groove.

9. The home appliance of claim 3, wherein the worm shaft further comprises a rib portion extending from the insertion portion along the first direction and having a cylindrical shape, and
wherein the second hole comprises a curve corresponding to the shape of the rib portion.

10. The home appliance of claim 2, wherein the housing comprises an upper housing configured to be coupled to the main body and a lower housing configured to be fastened to the upper housing.

11. The home appliance of claim 10, wherein the first hole is provided in the upper housing, and the second hole is provided in the lower housing.

12. The home appliance of claim 10, wherein the upper housing comprises a coupling protrusion protruding toward the main body, and
wherein the main body comprises a coupling hole to which the coupling protrusion is coupled.

13. The home appliance of claim 12, wherein the coupling hole extends along a circumferential direction.

14. The home appliance of claim 1, wherein the leg further comprises a head portion protruding from the male thread portion toward the main body.

15. The home appliance of claim 14, wherein the head portion comprises an inclined surface sloping upward toward the main body as being close to a center of the circle.
